# EUROPEAN PATENT SPECIFICATION

(11) **EP 3 494 157 B1**
(45) Date of publication and mention of the grant of the patent: **03.03.2021**
(21) Application number: 17764452.3
(22) Date of filing: 02.08.2017
(51) Int. Cl.: C08G 59/14, C08G 59/16, C08L 25/06

(54) **STABILIZERS FOR BROMINATED POLYMERIC FLAME RETARDANTS**
STABILISATOREN FÜR BROMIERTE POLYMERE FLAMMSCHUTZMITTEL
STABILISANTS POUR IGNIFUGES POLYMÈRES BROMÉS

(30) Priority: 02.08.2016 US 201662369788 P
(43) Date of publication of application: 12.06.2019
(73) Proprietor: Bromine Compounds Ltd., 8410101 Beer-Sheva (IL)
(72) Inventor: BEN DAVID, Iris, 7751626 Ashdod (IL); HIRSCHSOHN, Yaniv, 7666213 Rehovot (IL); EDEN, Eyal, 60850 Shoham (IL); MOYAL-ADAR, Tal, 8468571 Beer-Sheva (IL); MIASKOVSKI, Gershon, 8426511 Beer-Sheva (IL)
(74) Representative: Ter Meer Steinmeister & Partner
(86) International application number: PCT/IL2017/050854
(87) International publication number: WO 2018/025266

(56) References cited:
- EP-A2- 0 127 915
- EP-A2- 0 242 697
- WO-A2-2010/080285
- FR-A- 1 471 811
- US-A- 3 252 850

## Description

Brominated polymeric flame retardants are increasingly gaining commercial acceptance as replacements for 'small', low molecular weight brominated compounds. It is assumed that the higher the molecular weight of the brominated flame retardant, the lower the volatility and ability of the flame retardant to bio-accumulate in living tissues.

Brominated polymeric flame retardants can be divided into several groups. Flame retardants produced by means of addition of elemental bromine to carbon-carbon double bonds of a copolymerization product of vinyl aromatic monomer with a diene monomer warrant special consideration. The resultant flame retardants, which have bromine atoms chemically bound to aliphatic carbons, lack sufficient thermal stability to withstand processing temperature (melt temperature for processing plastic compositions reach 150-230°C). That is, these flame retardants are prone to undergo degradation and release bromine (in the form of HBr) under extrusion and foaming conditions.

Hereinafter, the name poly[styrene-co-butadiene] is used to denote a copolymer prepared from styrene and 1,3-butadiene monomers. The name poly[styrene-co-butadiene] is not limited to any particular distribution of the monomeric repeating units. Preferred, however, are block copolymers with polystyrene terminal blocks, which are named herein polystyrene-block-polybutadiene-block-polystyrene. Because 1,3-butadiene (CH₂=CH-CH=CH₂) can undergo both 1,2 addition and 1,4 addition, there are three types of repeat units in the resulting copolymer. One repeat unit corresponds to the styrene monomer, and the other two repeat units correspond to the different (1,2 and 1,4) addition forms of butadiene. It should be noted that the names poly[styrene-co-butadiene] and polystyrene-block-polybutadiene-*block*-polystyrene as used herein are not limited to any specific proportion of the 1,2 and 1,4 units.

The aforementioned polymers are useful starting material for producing brominated polymeric flame retardants; these starting materials are available on the market or can be prepared by copolymerization methods known in the art. On addition of elemental bromine to the aliphatic carbon-carbon double bonds of poly[styrene-co-butadiene], for example, to polystyrene-*block*-polybutadiene-*block*-polystyrene, a brominated polymer is obtained, as shown below: 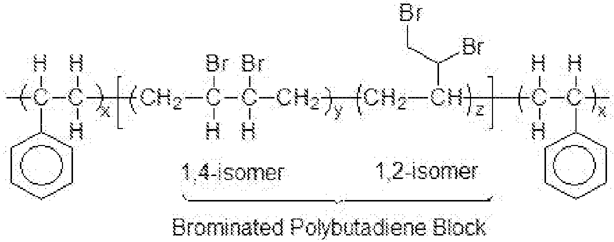 where x, y and z indicate the numbers of the three types of repeat units, respectively. The bromination reaction takes place in a solvent, as described in WO 2008/021418, to afford a brominated poly[styrene-co-butadiene]. Such brominated products, in particular, polystyrene-*block*-brominated polybutadiene-*block*-polystyrene, are commercially available (e.g., FR-122P from ICL-IP). Their weight average molecular weight is from 8,000 to 200,000, e.g., from 115,000 to 150,000, with bromine content of not less than 60%, e.g., from 60% to 66%. The 1,2 addition product generally constitutes from 75-85% of the total butadiene content.

As mentioned above, due to their inadequate stability at high temperatures, brominated polymeric flame retardants are incorporated into a bulk polymer (for example, polystyrene) alongside suitable stabilizers; the goal of the added stabilizer is to suppress degradation of the brominated polymeric flame retardant during processing.

WO 2010/080285 describes the use of an epoxy compound, an alkyl phosphite or their combination as stabilizers for aliphatic bromine-containing polymers. A variety of epoxy compounds are mentioned in WO 2010/080285; among these are epoxy novolac resins and brominated epoxy compounds, such as F-2200 from ICL-IP, which has the following formula:

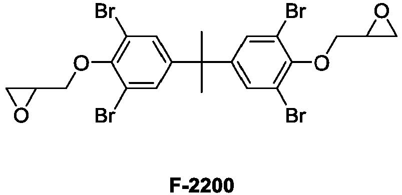

F-2200 is indeed a useful stabilizer. However, it consists essentially of the monomer unit depicted above. To elegantly satisfy industry's requirements, polymeric stabilizers are desired.

The present invention relates to a new class of polymeric stabilizers based on epoxy novolac resins. As used herein, the term 'epoxy novolac resin' is meant to include the copolymer obtained by the reaction of phenol, or alkyl-substituted phenol (e.g., cresol) with formaldehyde and subsequent glycidylation (e.g., with epichlorohydrin). Among these, poly[(phenyl glycidyl ether)-co-formaldehyde] (CAS number 28064-14-4), represented by Formula II, is especially preferred as a starting material to be modified according to the invention: 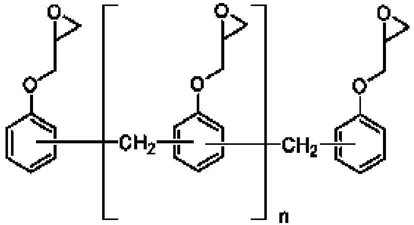 (Formula II; n is the average number of repeat units, 0.2≤n≤7, preferably 1.0≤n, e.g., 1.0≤n≤3.0, more preferably 1.5≤n≤2.5).

It should be noted that epoxy novolac resins are generally available as a mixture of isomers, because the reaction of phenol and formaldehyde creates a methylene bridge at either the ortho position or the para position of the phenolic aromatic rings. Formula II above is not limited to any particular para/ortho bridging pattern, covering a material with ortho-ortho, para-para and ortho-para bridges irrespective of their distribution. The epoxy novolac resins depicted above exist as viscous liquids or semi-solid materials, and are hence unsuitable for melt processing of polymers where bulk polymers and additives are employed in a form of a powder, granules or flakes.

The invention relates to the polymeric reaction products of epoxy novolac resins with monohydroxy aromatic compounds, (preferably halogenated monohydroxy aromatic compounds), optionally in the presence of a bifunctional agent for linking together epoxy novolac chains. The polymers were prepared and tested for their physical properties (e.g., melting range and glass transition temperature) and ability to increase the thermal stability of brominated poly[styrene-co-butadiene] in polystyrene compositions. When a novolac epoxy resin reacts with a monohydroxy aromatic compound, for example, halogenated phenol, the epoxide group is cleaved to form hydroxyl and the halogenated aromatic ring attaches through an ether linkage to the backbone chain. The reaction progresses with the aid of a catalyst, by the addition of halogenated monohydroxy aromatic compound to a liquid novolac epoxy resin starting material, e.g., of Formula II, and solidifying the reaction product.

Accordingly, one aspect of the invention is a process comprising reacting an epoxy novolac resin with monohydroxy aromatic compound, optionally in the presence of a polyfunctional agent for linking together the epoxy novolac chains. Modified, solid novolac epoxy resins are recovered.

The starting materials, e.g., epoxy novolac resins of Formula II are available on the market from various manufacturers. Preferred are epoxy novolac resins of Formula II with epoxy equivalent weight of less than 250 g/mol epoxy, e.g., from 170 to 230 g/mol epoxy, more preferably from 170 to 200 g/mol epoxy (e.g., Epoxy Novolac D.E.N 438 and 439 from Dow, with Mw=1500-1600; Mn=900-950 and epoxy equivalent of ∼170-180 g/mol epoxy; and Mw=4500-4700; Mn=1100-1200 and epoxy equivalent of ∼185-210 g/mol epoxy, respectively).

The monohydroxy aromatic compound which takes part in the reaction comprises preferably a single aromatic ring, e.g., a benzene ring. Preferred are compounds of the formula HO-C₆H₅₋ₘXₘ, where X is alkyl or halogen and m is an integer from 0 to 5. Thus, (preferably halogenated) phenol of the Formula III is reacted with the epoxy novolac resin: 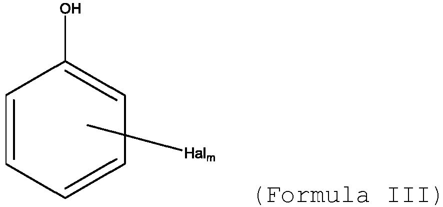 wherein Hal is selected from the group of bromine and chlorine and m is an integer from 0 to 5, inclusive; Preferably, m is 3, 4, or 5. Among these, 2,4,6-Tribromophenol is preferred (sometimes abbreviated herein TBP). Mixed halogenated compounds (bearing chlorine and bromine) are also within the scope of Formula III. Hence, suitable monohydroxy aromatic compounds of Formula III include: 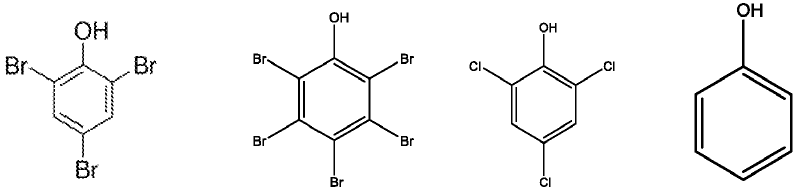 Non-halogenated, alkyl-substituted phenol can also be used in the process of the invention, e.g., 2,4,6-trimethyl phenol:

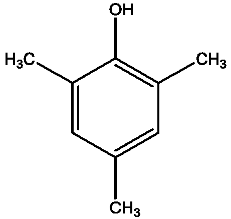

It should be noted that the class of monohydroxy aromatic compounds is not limited to compounds where the hydroxyl group is directly bonded to a carbon atom of the aromatic ring; the -OH functionality may also be part of a carboxylic group attached to the ring e.g., benzoic acid wherein the benzene ring may be additionally substituted, e.g., with halogen or alkyl groups. Two examples of monohydroxy aromatic compounds of this type, that were tested in the experimental work reported herein, are benzoic acid and 2, 4-dichlorobenzoic acid depicted below:

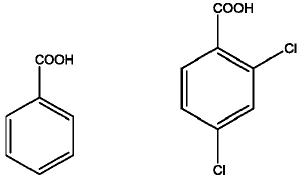

It should also be noted that monohydroxy aromatic compounds having more than one aromatic ring, for example, two aromatic rings that are fused together with -OH bonded to a carbon ring, such as 1-naphthol, or -OH being part of a carboxylic acid group bonded to a carbon ring, such as 1-naphthoic acid, are also suitable for use.

The preferred monohydroxy aromatic compounds for use in this invention can also be described with the linear formulas HO-C₆H₅₋ₘXₘ or HOOC-C₆H₅₋ₘXₘ wherein X is selected from halogen (e.g., bromine, chlorine) and alkyl (e.g., methyl) and 0≤m≤5.

Yet another reactant required for the reaction is a polyfunctional compound; as noted above, epoxy novolac chains are covalently linked together with the aid of a polyfunctional, preferably bi-functional, compound. Several types of polyfunctional compounds may be considered for this purpose, especially HO-R¹-OH, HOOC-R²-COOH, HO-R³-COOH, ₂HN-R⁴-NH₂ and R⁴-NH₂, wherein R¹, R², R³ and R⁴ are aromatic or aliphatic moieties. Namely, a compound containing two hydroxyl groups (a dihydroxy compound), a compound containing two carboxylic acid (a diacid compound), a compound containing one hydroxyl group and one carboxylic acid, and compounds containing one or more amine groups.

Bi-functional agents of the formula HO-R¹-OH include compounds wherein R¹ comprises either one aromatic ring, two or more non-fused aromatic rings or two or more fused aromatic rings.

In one preferred embodiment of the invention, HO-R¹-OH comprises two non-fused aromatic rings, with each ring bearing one -OH group, as shown by Formula IV: 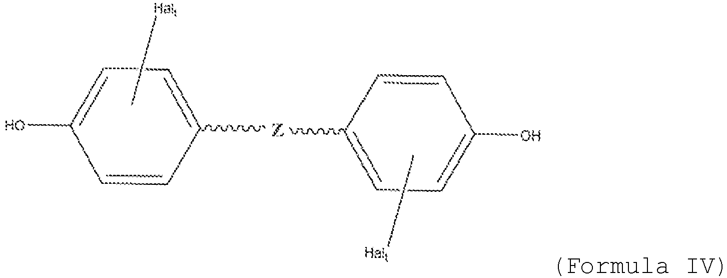 wherein ∼∼Z∼∼ is a bridging moiety, such as -(CX₂)ₚ- or -SO₂-, especially -(CX₂)ₚ- wherein each X is independently H or -CH₃ (preferably both X are -CH₃), p is 0 or 1 (preferably p is 1), Hal is halogen (especially bromine) and t is an integer indicating the number of halogen atoms attached to the benzene ring, e.g. t is 0, 1 or 2, preferably 2. Some preferred examples are tabulated below.

**Table A**

| ∼∼Z∼∼ | p | X | t | Hal | |
|---|---|---|---|---|---|
| bridging moiety is -(CX₂)ₚ- | 1 | CH₃ | 2 | Br | 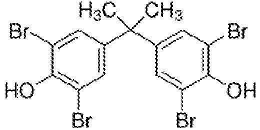 |
| | | | | | tetrabromobisphenol A |
| bridging moiety is -(CX₂)ₚ- | 1 | CH₃ | 0 | - | 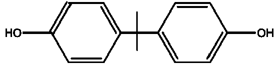 |
| | | | | | Bisphenol A |
| bridging moiety is -(CX₂)ₚ- | 1 | H | 0 | | 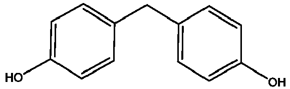 |
| | | | | | Bisphenol-F |
| bridging moiety is -(CX₂)ₚ- | 0 | - | - | - | 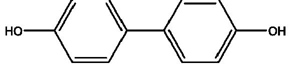 |
| | | | | | 4,4'-biphenol |
| bridging moiety is -S(O₂)- | | | 2 | Br | 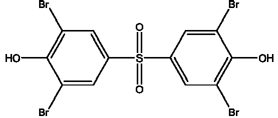 |
| | | | | | tetrabromobisphenol S |

Among the dihydroxy compounds set out in Table A, particularly preferred is 4,4'-isopropylidene-bis(2,6-dibromophenol), which is also known as tetrabromobisphenol A (hereinafter sometimes abbreviated TBBA).

In another embodiment of the invention, HO-R₁-OH comprises one aromatic ring, such that the bi-functional agent has the formula HO-Ar-OH wherein Ar is an (optionally halogenated and/or alkylated) aromatic ring, e.g., benzene. For example, HO-Ar-OH may be hydroquinone and halogenated hydroquinone.

In another embodiment of the invention, HO-R₁-OH comprises two or more fused aromatic rings, such that the bi-functional agent has the formula HO-(Ar)ₙ-OH, wherein (Ar)ₙ indicates a fused aromatic system composed of two or more aromatic rings (n≥2), with -OH groups being attached to the same ring or to different rings, for example, hydroxy-substituted naphthalene, e.g., 2,7,-dihydroxy naphthalene.

Bi-functional agents of the formula HOOC-R²-COOH include compounds wherein R² comprises one or more optionally substituted aromatic ring(s), (e.g., halogen-substituted) or R² comprises an optionally substituted aliphatic chain (e.g., halogen-substituted).

In one embodiment of the invention, HOOC-R²-COOH contains a single aromatic ring, for example, compounds of the formula C₆H₄(COOH)₂ may be used, namely, benzene-1,2-dicarboxylic acid, benzene-1,3-dicarboxylic acid, and benzene-1,4-dicarboxylic acid.

In another embodiment of the invention, HOOC-R²-COOH comprises aliphatic chains. That is, saturated dicarboxylic acids of the formula HOOC(CH₂)ₙCOOH, with 0≤n≤20, e.g., 1≤n≤20, or unsaturated dicarboxylic acids HOOC(CH=CH)ₘ(CH₂)ₙCOOH, where m≥1 and n≥0 (in case of m>1 the carbon-carbon double bonds are alternately positioned along the chain), such as fumaric acid, are suitable for use as bi-functional agents in the process of the invention. The chains terminated with the -COOH functionalities may be branched and/or interrupted by one or more heteroatom(s), for example, 3,3'-dithiodipropionic acid:

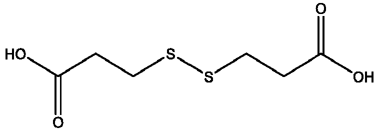

Bi-functional agents of the formula HO-R³-COOH include compounds wherein R³ comprises one or more optionally substituted aromatic ring(s) (e.g., halogen-substituted) or R³ comprises an optionally substituted aliphatic chain, (e.g., halogen-substituted).

In one embodiment of the invention, R³ comprises a single aromatic ring to which both hydroxyl and carboxylic acid groups are attached, e.g., HO-R³-COOH is hydroxy-substituted benzoic acid, such as 3-hydroxy benzoic acid and 4-hydroxy benzoic acid.

In another embodiment of the invention, HO-R³-COOH is hydroxyl-substituted saturated or unsaturated dicarboxylic acids as defined above.

Another type of bi-functional agents to be considered are compounds incorporating amine group(s) in their structure, i.e., either mono- and di-amines. For example, a compound with two amine groups bonded either to one or two aromatic rings may be employed, such as C₆H_{q}R'_{4-q}(NH₂)₂, wherein 0≤q≤4 and R' is a lower alkyl group, e.g., C₁-C₃ alkyl, or ₂HN-H₄C₆∼∼Z∼∼C₆H₄-NH₂ where ∼∼Z∼∼ is bridging group as previously described, where the aromatic rings may be substituted. Alternatively, aliphatic amines, e.g., linear or branched alkyl chains bearing (primary) amine group(s) positioned along the chain can be used.

Thus, the invention is primarily directed to a polystyrene composition, comprising:polystyrene;a flame retardant selected from the group consisting of bromine-containing polymers having bromine atoms bound to aliphatic carbons, and a stabilizer selected from the group consisting of polymer comprising chains of Formula I: 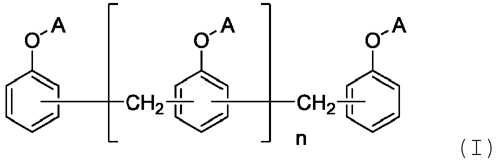 wherein n is from 0.2≤n≤7, preferably 1.0≤n, e.g., 1.0≤n≤3.0, more preferably 1.5≤n≤2.5, and wherein
(i) the polymer comprises individual, nonlinked chains of Formula (I), with A being a pendant group selected from:
   **A**= 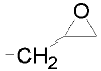
   **A=** -CH₂-CHOH-CH₂-O-C₆H₅₋ₘXₘ, wherein X is independently selected from the group consisting of halogen and alkyl and m is an integer indicating the number of halogen atoms or alkyl groups attached to the benzene ring (0≤m≤5); preferably **A** is -CH₂-CHOH-CH₂-O-C₆H₅-ₘHalₘ, wherein Hal is halogen (especially bromine);
   **A=** -CH₂-CHOH-CH₂-O-Ar, wherein Ar comprises at least two, preferably fused, aromatic rings optionally substituted with alkyl or halogen;
   **A=** -CH₂-CHOH-CH₂-O(O)C-C₆H₅₋ₘXₘ, wherein X is independently selected from the group consisting of halogen and alkyl and m is an integer indicating the number of halogen atoms or alkyl groups attached to the benzene ring (0≤m≤5); and
   **A=** -CH₂-CHOH-CH₂-O(O)C-Ar, wherein Ar comprises at least two, preferably fused, aromatic rings optionally substituted with alkyl or halogen,
(ii) the polymer is non-linear, comprising chains of Formula I linked together by having at least one A group of a first chain and an A group of at least a second chain forming together a bridge of the formula -CH₂-CHOH-CH₂-Linker-CH₂-CHOH-CH₂, where remaining A groups in said chains being pendant groups selected from:
   **A**= 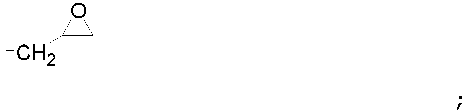
   **A=** -CH₂-CHOH-CH₂-O-C₆H₅₋ₘXₘ, wherein X is independently selected from the group consisting of halogen and alkyl and m is an integer indicating the number of halogen atoms or alkyl groups attached to the benzene ring (0≤m≤5); preferably **A** is -CH₂-CHOH-CH₂-O-C₆H₅-ₘHalₘ, wherein Hal is a halogen (especially bromine);
   **A=** -CH₂-CHOH-CH₂-O-Ar, wherein Ar comprises at least two, preferably fused, aromatic rings optionally substituted with alkyl or halogen;
   **A=** -CH₂-CHOH-CH₂-O(O)C-C₆H₅₋ₘXₘ, wherein X is independently selected from the group consisting of halogen and alkyl and m is an integer indicating the number of halogen atoms or alkyl groups attached to the benzene ring (0≤m≤5); and
   **A=** -CH₂-CHOH-CH₂-O(O)C-Ar, wherein Ar comprises at least two, preferably fused, aromatic rings optionally substituted with alkyl or halogen.

Preferably, the polymer of the invention which comprises chains of Formula I has epoxy equivalent weight in the range from 250 to 600 g/mol epoxy.

In the absence of a bifunctional agent, the resultant polymer obtained upon adding (optionally halogenated) monohydroxy aromatic compound to epoxy novolac resin is a solid substance comprising individual chains composed of phenolic rings connected by methylene bridges (i.e., novolac chains), with pendant groups distribution consisting of the original glycidyl ether and the newly-introduced halogenated aromatic rings. Thus, a specific aspect of the invention is a polymer comprising individual chains of Formula I-a:

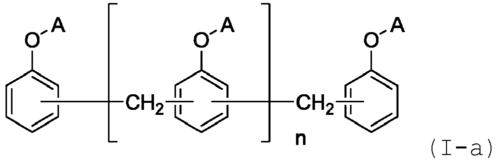

Wherein n is from 0.2≤n≤7, preferably 1.0≤n, e.g., 1.0≤n≤3.0, more preferably 1.5≤n≤2.5, and wherein the pendant groups denoted by A are selected from
**A**= 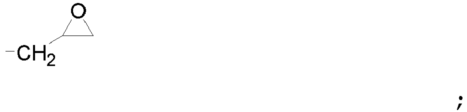
**A=** -CH₂-CHOH-CH₂-O-C₆H₅₋ₘXₘ, wherein X is independently selected from the group consisting of halogen and alkyl and m is an integer indicating the number of halogen atoms or alkyl groups attached to the benzene ring (0≤m≤5); preferably **A** is -CH₂-CHOH-CH₂-O-C₆H₅-ₘHalₘ, wherein Hal is halogen (especially bromine), m is 0, 1, 2, 3, 4 or 5, preferably 3, 4 or 5. Most preferably, A is 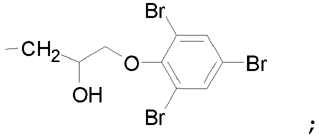
**A=** -CH₂-CHOH-CH₂-O-Ar, wherein Ar comprises at least two, preferably fused, aromatic rings optionally substituted with alkyl or halogen;
**A=** -CH₂-CHOH-CH₂-O(O)C-C₆H₅₋ₘXₘ, wherein X is independently selected from the group consisting of halogen and alkyl and m is an integer indicating the number of halogen atoms or alkyl groups attached to the benzene ring (0≤m≤5); and
**A=** -CH₂-CHOH-CH₂-O(O)C-Ar, wherein Ar comprises at least two, preferably fused, aromatic rings optionally substituted with alkyl or halogen.

Preferably, the polymer of the invention which comprises individual chains of Formula I-a has epoxy equivalent in the range from 350 to 600 g/mol epoxy, e.g., 450 to 600 g/mol epoxy.

The reaction of novolac epoxy resin with (optionally halogenated) monohydroxy aromatic compound in the presence of a bifunctional agent leads to the formation of a non-linear polymer of Formula I-b with three different types of repeat units. The polymer of Formula I-b of the structure depicted below forms another aspect of the invention: 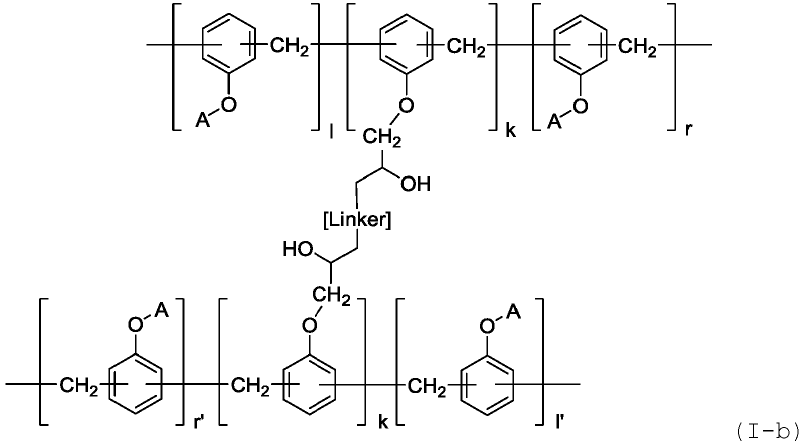 wherein:
r and r' independently indicate the number of repeat units where A is a pendant group of the formula:
   **A**= 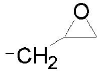
1 and 1' independently indicate the number of repeat units where A is a pendant group selected from:
   **A=** -CH₂-CHOH-CH₂-O-C₆H₅₋ₘXₘ, wherein X is independently selected from the group consisting of halogen and alkyl and m is an integer indicating the number of halogen atoms or alkyl group attached to the benzene ring (0≤m≤5); preferably **A** is -CH₂-CHOH-CH₂-O-C₆H₅-ₘHalₘ, wherein Hal is a halogen (especially bromine), and m is an integer indicating the number of halogen atoms attached to the benzene ring, e.g., m is 0, 1, 2, 3, 4 or 5, preferably 3, 4 or 5; most preferably, A is 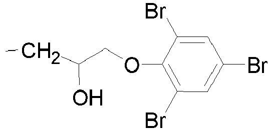
   **A=** -CH₂-CHOH-CH₂-O-Ar, wherein Ar comprises at least two, preferably fused, aromatic rings optionally substituted with alkyl or halogen;
   **A=** -CH₂-CHOH-CH₂-O(O)C-C₆H₅₋ₘXₘ, wherein X is independently selected from the group consisting of halogen and alkyl and m is an integer indicating the number of halogen atoms or alkyl groups attached to the benzene ring (0≤m≤5); and
   **A=** -CH₂-CHOH-CH₂-O(O)C-Ar, wherein Ar comprises at least two, preferably fused, aromatic rings optionally substituted with alkyl or halogen;
k indicates the number of repeat units which are junction points through which individual chains are crosslinked, with the Linker being selected from:
   1) -O-R¹-O-, where R¹ is an aromatic or aliphatic moiety, namely, -O-R¹-O- is derived from dihydroxy (a compound bearing two hydroxyl groups), for example:
      1.1) -O-R¹-O- corresponds to a dihydroxy compound with two non-fused aromatic rings, i.e., hydroxyphenyl functionalities, such that the Linker has the formula -O-Ar∼∼Z∼∼Ar-O- wherein each Ar is an optionally substituted (e.g., halogenated) benzene ring and ∼∼Z∼∼ indicates the bridge connecting carbon atoms of the two benzene rings, preferably at the para position; e.g., ∼∼Z∼∼ is -(CX₂)ₚ- such that the Linker has the formula -O-C₆H₄₋ₜHalₜ-(CX₂)ₚ-C₆H₄₋ₜHalₜ-O- where each X is independently H or -CH₃ (preferably both X are -CH₃), p is 0 or 1 (preferably p is 1), Hal is halogen (especially bromine) and t is an integer indicating the number of halogen atoms attached to the benzene ring, e.g. t is 0, 1 or 2, preferably 2;
         or Z is -SO₂-, such that the Linker has the formula -O-C₆H₄₋ₜHalₜ-SO₂-C₆H₄₋ₜHalₜ-O, where Hal and t are as previously defined;
      1.2) -O-R¹-O- corresponds to a dihydroxy compound with a single aromatic ring, such that the Linker has the formula -O-Ar-O-wherein Ar is an optionally substituted (e.g., halogenated) benzene ring, for example, the Linker is -O-C₆H₄₋ₜHalₜ-O-, wherein Hal is halogen (especially bromine) and t is an integer indicating the number of halogen atoms attached to the benzene ring, e.g. t is 0, 1, 2 or 4;
      1.3) -O-R¹-O- corresponds to a dihydroxy compound with two or more fused aromatic rings, the Linker having the formula -O-(Ar)ₙ-O-, wherein (Ar)ₙ indicates a fused aromatic system composed of two or more optionally substituted aromatic rings, e.g., two benzene rings, such as naphthalene;
   2) -O(O)C-R²-C(O)O-, where R² is an aromatic or aliphatic moiety, namely, -O(O)C-R²-C(O)O- is derived from diacid (a compound bearing two -COOH groups), for example:
      2.1) -O(O)C-R²-C(O)O- corresponds to dicarboxylic acid where the two carboxylic acid groups are attached to the same or different aromatic rings, such that the Linker has the formula -O(O)C-Ar-C(O)O- wherein Ar is an optionally substituted (e.g., halogenated) aromatic system, including fused aromatic compound. Ar may be for example a benzene ring, for example, the Linker is -O(O)C-C₆H₄₋ₜXₜ-C(O)O-, wherein the position of the C(O)O- groups may be o, m, or p relative to one another, X is alkyl or halogen and t is 0, 1, 2, 3 or 4;
      2.2) -O(O)C-R²-C(O)O- corresponds to a saturated dicarboxylic acid, such that the Linker has the formula -O(O)C(CH₂)ₙC(O)O-, with 0≤n≤20, e.g., 1≤n≤20, wherein the -(CH₂)ₙ- chain may be branched and/or interrupted by one or more heteroatom(s);
      2.3) -O(O)C-R²-C(O)O- corresponds to an unsaturated dicarboxylic acid, such that the Linker has the formula -O(O)C(CH=CH)ₘ(CH₂)ₙC(O)O-, where m≥1 and n≥0, wherein the -(CH=CH)ₘ(CH₂)ₙ- chain may be branched and/or interrupted by one or more heteroatom(s),
   3) -O-R³-C(O)O-, where R³ is an aromatic or aliphatic moiety, namely, -O-R³-C(O)O is a moiety derived from hydroxy-acid (a carboxylic acid substituted with a hydroxyl group), for example:
      3.1) -O-R³-C(O)O- corresponds to aromatic carboxylic acid with -OH bonded to an aromatic ring, such that the Linker has the formula -O-Ar-C(O)O- wherein Ar is an optionally substituted (e.g., halogenated) aromatic system e.g., a benzene ring, e.g., the Linker is -O(O)C-C₆H₄₋ₜXₜ-C(O)O- where X is alkyl or halogen and t is 0, 1, 2, 3 or 4;
      3.2) -O-R³-C(O)O- corresponds to aliphatic carboxylic acid with -OH bonded to the aliphatic linear or branched optionally substituted aliphatic chain, such that the Linker has the formula -O-R³-C(O)O- where R³ is straight or branched alkyl or alkenyl chain;
   4) -HN-R⁴-NH-, or R⁴-(N=) wherein R⁴ is an aromatic or aliphatic moiety, namely, -HN-R⁴-NH- and R⁴-(N=) are moieties derived from diamines and monoamine, respectively, e.g.,:
      4.1) -HN-R⁴-NH- corresponds to a compound with two amine groups bonded to one or two aromatic rings, such that the linker has the formula -HN-C₆H_{q}R'_{4-q}-NH-, wherein 0≤q≤4 and R' is a lower alkyl group, e.g., C₁-C₃ alkyl, or -HN-H₄C₆∼∼Z∼∼C₆H₄-NH- and Z is bridging group as previously described;
      4.2) R⁴⁻(N=) or -HN-R⁴-NH- correspond to linear or branched alkyl mono or diamine, such that the linker has the formula CH₃(CH₂)ₘN= or -HN-(CH₂)ₘ-NH-, with 0≤m≤20; and
r+k+l=n+2, r'+k+l'=n+2, where 0.2≤n≤7, preferably 1.0≤n, e.g., 1.0≤n≤3.0, more preferably 1.5≤n≤2.5.

It should be noted that in Formula I-b, the three different types of repeat units may be arranged along the polymer chain in any order, that is, the junction point may also be a terminal unit. The polymers of Formula I-b are free flow melt-blendable materials that can be fed and processed in an extruder. In the polymers of Formula I-b, preferably l+l'>0. Preferably, the distribution of the repeat units is such that r+r'>2k+l+l', for example, the epoxy-containing units constitute not less than 60% of the total number of units. Preferably, the polymer of the invention which comprises chains of Formula I-b has epoxy equivalent in the range from 250 to 450 g/mol epoxy.

The polymers of the invention can be prepared by various methods. One environmentally friendly approach that was already mentioned above is based on solventless conditions; the process of the invention comprises combining the starting material of Formula II with (preferably halogenated) monohydroxy aromatic compound and optionally a bifunctional agent in the presence of a catalyst under heating to form a liquid reaction mixture, allowing the reaction to reach completion and recovering a polymer of Formula or I-a or I-b in a solid particulate form. This process, which is devoid of a solvent, forms another aspect of the invention.

For example, a reaction vessel is charged with the starting material of Formula II and heated to a temperature of not less than 115°C, preferably not less than 140°C and more preferably not less than 150°C (hereinafter "the reaction temperature"). The catalyst, the halogenated monohydroxy aromatic compound and optionally the cross-linking agent are added to the reaction vessel; the addition may cause the temperature to drop slightly. The reaction mixture is brought to the desired reaction temperature (e.g., above 115°C as indicated above) and kept under stirring at the reaction temperature for a relatively short period of time, say, about five to thirty minutes. Due to the viscosity of the reaction mass, efficient stirring may be achieved with the aid of high shear impeller. The reaction mass is then poured onto a suitable tray and placed in an oven set at a suitable temperature (e.g., from 140°C to 160°C) and allowed to stand there for a few hours, such that the reaction reaches completion under static conditions (by static conditions is meant that there are no moving elements in direct contact with the reaction mixture) . At the end of this "static reaction period", the reaction mass is cooled to cause solidification. The resultant lump is broken up to collect the polymer in particulate form and the particles may be optionally ground.

It is also possible to allow the reaction mixture to reach completion in a reactor under heating and stirring without the need for a long static reaction period as described above. In this case, the reaction may last about one to seven hours depending on the reaction temperature (e.g., from 115 to 150°C) and a solid product can be recovered by applying the liquid reaction product onto a rotating, internally cooled drum (a flaker) and breaking the so-formed solid thin layer into flakes.

As an alternative, the preparation of the polymers of Formulas I-a or I-b may take place in a solvent, such as an aromatic hydrocarbon (e.g. toluene) or ketone (e.g. methyl isobutyl ketone).

As mentioned above, an especially preferred starting material used in the reaction is the (preferably halogenated) phenol of the Formula III: 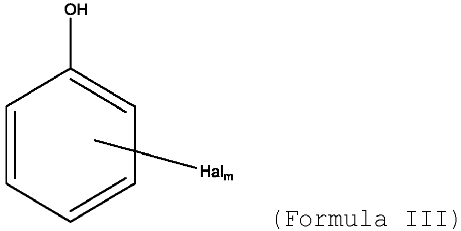 wherein Hal is selected from the group of bromine and chlorine and m is an integer from 0 to 5, inclusive; Preferably, m is 3, 4, or 5. Among these, 2,4,6-Tribromophenol is preferred (sometimes abbreviated herein TBP). Mixed halogenated compounds (bearing chlorine and bromine) are also within the scope of Formula III.

The reaction of epoxy novolac resin with halogenated monohydroxy aromatic compound and bi-functional (e.g., dihydroxy) compound is advanced with the aid of a catalyst. Suitable catalysts include phosphonium bromides, e.g., tetrabutylphosphonium bromide (hereinafter abbreviated TBPB) and ethyltriphenyl phosphonium bromide. Amines (e.g., tertiary amines), quaternary ammonium salts and triphenyl phosphine may also be mentioned as useful catalysts.

More specifically, an epoxy novolac resin of Formula II: 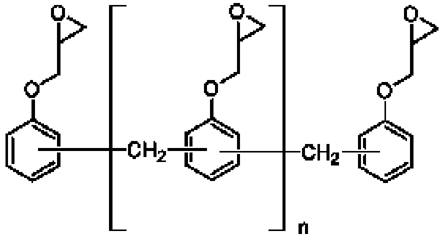 (0.2≤n≤7.0, preferably 1.0≤n, e.g., 1.0≤n≤3.0, more preferably 1.5≤n≤2.5, preferably with epoxy equivalent of 170-200 g/mol epoxy), is reacted with the halogenated phenol of Formula III: 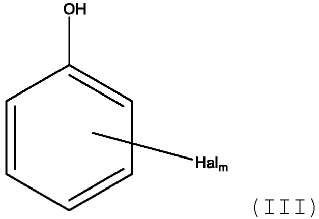 in a weight ratio from 55-70 : 45-30, preferably from 60-70 : 40-30, more preferably from 63-70 : 37-30 (II:III). When the dihydroxy compound with two hydroxyphenyl functionalities of Formula IV takes part in the reaction: 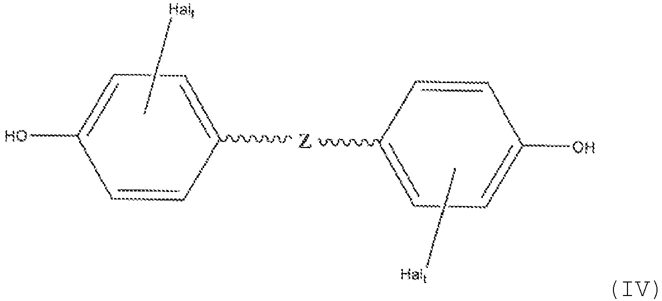 then the three reactants are applied in a weight ratio of 55-70 : 5-30 : 5-30, preferably from 60-70 : 5-15 : 15-30 (II:III:IV).

That is, the preferred weight ratio II:III, to give the polymer of Formula I-a, or II:(III+IV), to give the polymer of Formula I-b, is around 2:1, e.g., 2.2:1-1.8:1. Addition of compounds of Formula III and IV to the epoxy novolac resin leads to polymers with increased epoxy equivalent weight on account of the reduced number of epoxy groups per unit weight. In the resultant polymers, the molar percentage of "occupied epoxy group" preferably does not exceed 35%, e.g., from 27% to 33%, e.g., around 29-30%.

Some characteristics of preferred polymers of Formula I-a and I-b according to the invention are tabulated below in Table A. For simplicity, in the structures depicted in Table A below, the degree of polymerization in the individual chains was rounded off to 4, such that each individual chain consists of four repeating units; to further simplify the presentation of data, the individual chains show only the ortho-ortho arrangement. In addition, the position of the pendent group and branch points were chosen arbitrarily. It is seen that the polymers of Formula I-a and I-b exhibit adequate physical properties combined with sufficiently low epoxy equivalent weight.

**Table B**

| Low point of the melting range (°C) | Tg (°C) | Br content (wt%) | EEW (g/mol epoxy) |
|---|---|---|---|
| 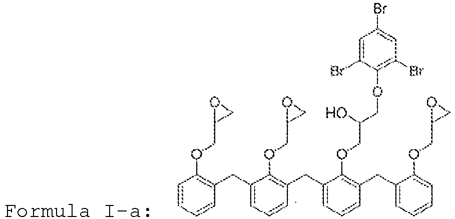 | | | |
| 35-50 | 20-35 | 20-35 | 450-600 |
| 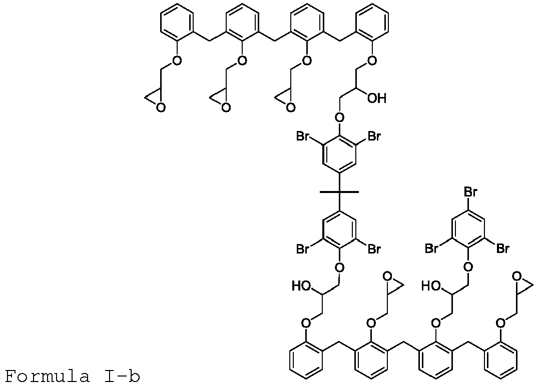 | | | |
| 45-70°C (e.g., 50-65°C) | 30-45°C (e.g., 37-42°C) | 17-30% (e.g., 18-26%) | 350-450 (e.g., 360-400) |

The polymers of the invention also exhibit good color properties, that is, low APHA values, indicating their suitability as additives in polymeric formulations without worsening the appearance of the formulations. APHA values of less than 250, e.g., from 50 to 180 and more specifically from 50 to 150 were measured for the polymers of the invention (40% w/v solution in dioxane), and also Gardner values of less than 1.0 (40% w/v solution in dioxane).

The experimental results reported below indicate that the polymers of Formulas I-a and I-b are most effective in stabilizing against thermal degradation of brominated polymeric flame retardants having bromine atoms chemically bound to aliphatic carbons (such as polystyrene-*block-*brominated polybutadiene-*block*-polystyrene) added to polystyrene formulations. The polymers of Formulas I-a and I-b have been shown to suppress HBr emission from the brominated flame retardant under extrusion-like conditions and to minimize changes in appearance of molded samples following exposure to very high temperatures (3 minutes/200°C and 5 minutes/220°C press stability tests described below; change in appearance is meant to include one or more of the following observations: color deterioration; formation of black spots; and samples becoming yellow and then brown). Thermogravimetric analysis (TGA), which measures the weight loss of a sample as sample temperature is increased, also attests for the good thermal stability of polystyrene formulations into which the polymers of Formulas I-a and I-b were added to stabilize the brominated flame retardant.

The use of the polymers of the invention (Formulas I, I-a and I-b) as thermal stabilizers of polymeric brominated flame retardants in bulk polymers form another aspect of the invention. It is provided a polystyrene composition, comprising polystyrene and:
a flame retardant selected from the group consisting of bromine-containing polymers having bromine atoms bound aliphatic carbons, in particular polystyrene-*block*-brominated polybutadiene-*block*-polystyrene; and
a stabilizer selected from the group consisting of the polymers of Formulas I, I-a and I-b.

The polystyrene composition is preferably a polystyrene foam, either extruded (XPS foam) or expanded (EPS foam). Melt processing methods to produce such foams and conventional additives employed in such processes are known in the art and are described, for example, in US 2008/0096992 and WO 2010/080285.

In the polystyrene composition of the invention, the weight ratio between the brominated polymeric flame retardant and the additive of Formulas I-a or I-b is from 100:10 to 100:50, preferably from 100:15 to 100:35, more preferably from 100:15 to 100:25, inclusive.

The polymers of Formulas I-a and I-b have been shown to act as thermal stabilizer alongside auxiliary additives such as alkyl phosphite (e.g., those described in WO 2010/080285), hindered phenols and minerals such hydrotalcite. For example, a ternary combination consisting of a polymer of Formulas I-a or I-b, alkyl phosphite and hindered phenol has been successfully used to stabilize the brominated polymeric flame retardant at 100 : 15-25 : 7-12 :2-7 weight ratio (standing for the brominated FR : polymer of Formulas I-a or I-b : alkyl phosphite : hindered phenol).

A binary mixture of stabilizers consisting of the polymer of Formulas I-a or I-b and hydrotalcite is also very useful. Hydrotalcite is a potent stabilizer but it may interfere with the foaming process. We have found that it can be used in a fairly low amount in combination with the additive of the invention to impart high degree of thermal stabilization to brominated polymeric flame retardant, for example, at 100 : 15-25 : 2-10 weight ratio (standing for the brominated FR : polymer of Formulas I-a or I-B : hydrotalcite).

### Examples

### Methods

Melting range was determined by the capillary method. Epoxy equivalent was determined according to ASTM D 1652. Bromine content was determined by Parr-Bomb (%Br).

Mw was measured by: An Agilent instrument model HP-1200. Three subsequent PLgel columns, 10 µm, 10 µm and 3 µm. Calibration was done comparing to polystyrene standards.

TGA analysis was performed by a Mettler-toledo instrument model 850. 10 mg sample were heated in aluminum oxide crucible from room temperature to about 650°C with heating rate of 10°C/min in an air atmosphere.

T_{g} was measured by DSC (taken as midpoint). The DSC analysis was performed with a Mettler-toledo instrument model 1821E. Samples were heated in sealed aluminum crucible from 50°C to about 150°C at a heating rate of 20°C/min.

### Example 1

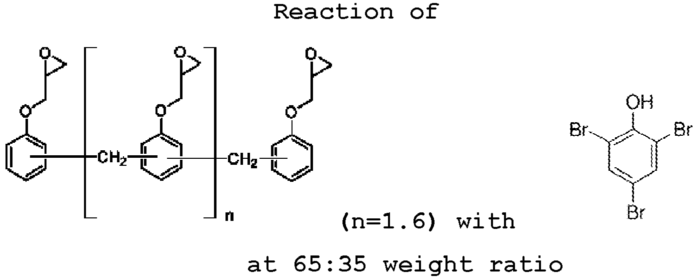

Epoxy Novolac 438 (151.1 g) was melted in a glass vessel and heated to 155°. The catayst TBPB (75mg) was added, followed by the addition of TBP (78.2g). The temperature droped to 120-130°C; the mixture was re-heated to 145°C, stirred for 5-10 minutes, and then poured onto a tray and placed in an oven at 160°C for 6 hours. The product was manually crushed with the aid of a pestle and mortar, and the powder collected was subjected to analysis.

Melting range was found to be from 41 to 67°C. DSC analysis indicated that the T_{g} (midpoint) is 24.5°C. Bromine content of the product was 25.5 wt%. The weight average molecular weight was 2150. The epoxy equivalent was 575 g/mol epoxy.

### Example 2

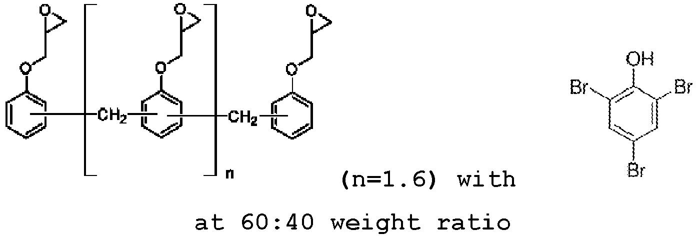

Epoxy Novolac 438 (93.3 g) was melted in a glass vessel and heated to 155°. The catayst TBPB (50mg) was added, followed by the addition of TBP (62.2g). The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 46 to 74.2°C. DSC analysis indicates that the T_{g} (midpoint) is 28.3. Bromine content of the product was 28.8 wt%. The weight average molecular weight was 2200. Epoxy equivalent was ∼500 g/mol epoxy.

### Example 3

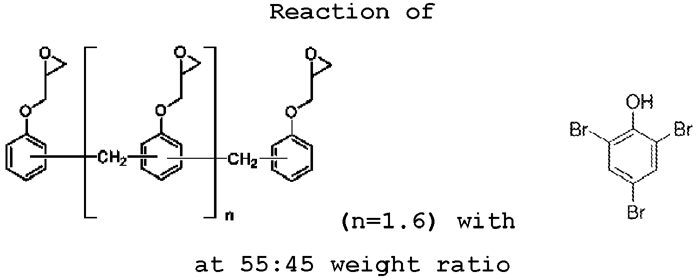

Epoxy Novolac 438 (90.6 g) was melted in a glass vessel and heated to 155°. The catayst TBPB (50mg) was added, followed by the addition of TBP (74.1). The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 50.7 to 74.3°C. DSC analysis indicates that the T_{g} (midpoint) is 33.0. Bromine content of the product is 32.4 wt%. The weight average molecular weight was 2310. Epoxy equivalent was ∼900 g/mol epoxy.

### Example 4

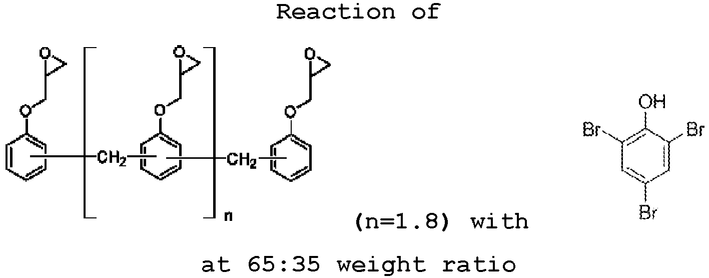

Epoxy Novolac 439 (111.2 g) was melted in a glass vessel and heated to 155°. The catayst TBPB (50mg) was added, followed by the addition of TBP (59.9). The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 53.6 to 71°C. DSC analysis indicates that the T_{g} (midpoint) is 35.4. Bromine content of the product was 25.0 wt%. The weight average molecular weight was 6980. Epoxy equivalent was 442 g/mol epoxy.

### Example 5

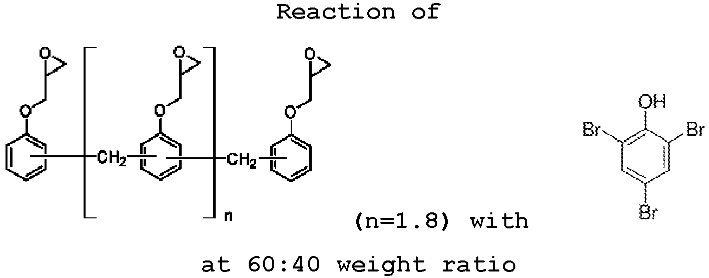

Epoxy Novolac 439 (100.6 g) was melted in a glass vessel and heated to 155°. The catayst TBPB (50mg) was added, followed by the addition of TBP (67.1). The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 57 to 85.7°C. DSC analysis indicates that the T_{g} (midpoint) is 38.6°C. Bromine content of the product was 28.5 wt%. The weight average molecular weight was 6800. Epoxy equivalent was 592 g/mol epoxy.

### Example 6

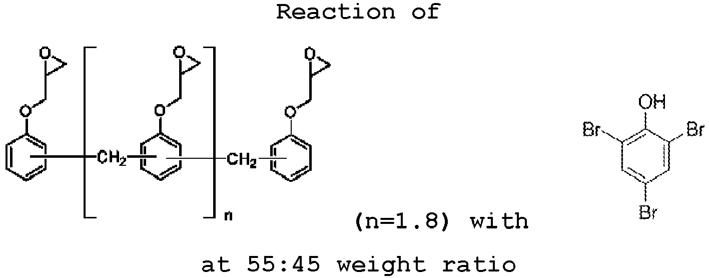

Epoxy Novolac 439 (89.0 g) was melted in a glass vessel and heated to 155°. The catayst TBPB (50mg) was added, followed by the addition of TBP (72.8). The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 61.5 to 91.2°C. DSC analysis indicates that the T_{g} (midpoint) is 42.9°C. Bromine content of the product was 32.1 wt%. The weight average molecular weight was 7150. Epoxy equivalent was 771 g/mol epoxy.

### Example 7

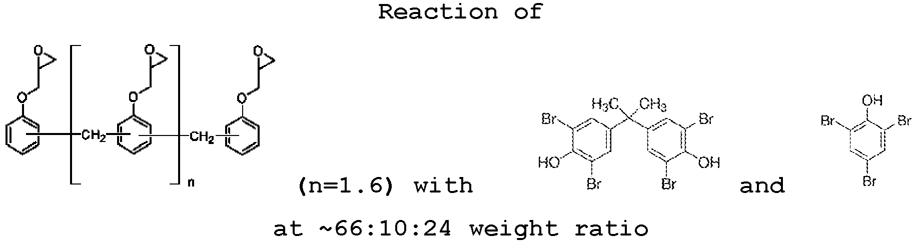

Epoxy Novolac 438 (95.7 g) was melted in a glass vessel and heated to 155°. TBBA (14.4) was added, followed by the addition of the catayst TBPB (50mg). TBP (34.1g) was the last added reactant. The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 49.3 to 70°C. DSC analysis indicates that the T_{g} (midpoint) is 32.3°C. Bromine content of the product was 22.7 wt%. The weight average molecular weight was 3410. Epoxy equivalent was 371 g/mol epoxy.

### Example 8

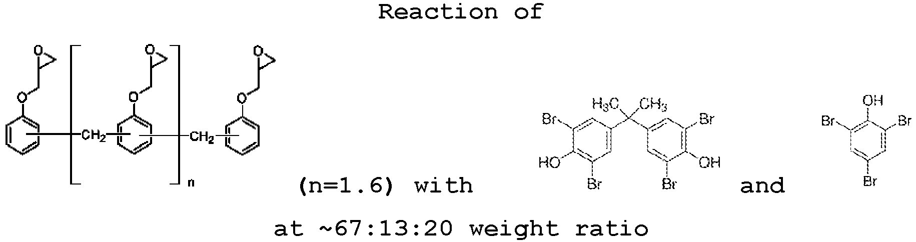

Epoxy Novolac 438 (100.5 g) was melted in a glass vessel and heated to 155°. TBBA (20.1) was added, followed by the addition of the catayst TBPB (50mg). TBP (29.7g) was the last added reactant. The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 52.5 to 81.2°C. DSC analysis indicates that the T_{g} (midpoint) is 35.8°C. Bromine content of the product was 21.8 wt%. The weight average molecular weight was 4320. Epoxy equivalent was 382 g/ mol epoxy.

### Example 9

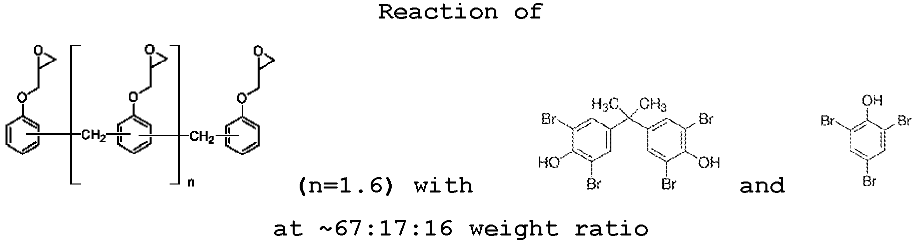

Epoxy Novolac 438 (93.9 g) was melted in a glass vessel and heated to 155°. TBBA (23.5) was added, followed by the addition of the catayst TBPB (50mg). TBP (22.0g) was the last added reactant. The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 56.2 to 73.4°C. DSC analysis indicates that the T_{g} (midpoint) is 37.1°C. Bromine content of the product was 20.9 wt%. The weight average molecular weight was 5360. Epoxy equivalent was 382 g/ mol epoxy.

### Example 10

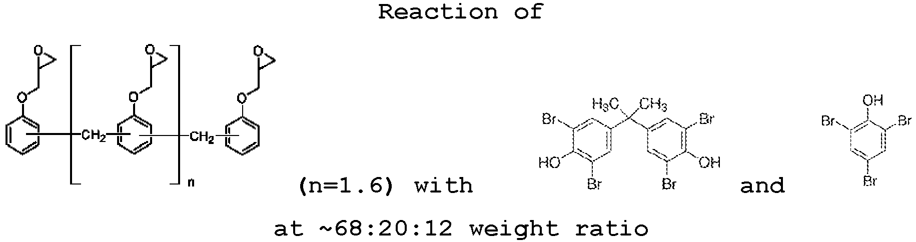

Epoxy Novolac 438 (96.7 g) was melted in a glass vessel and heated to 155°. TBBA (29.0) was added, followed by the addition of the catayst TBPB (50mg). TBP (16.8g) was the last added reactant. The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 61.4 to 86.6°C. DSC analysis indicates that the T_{g} (midpoint) is 37.2°C. The bromine content of the product was 20.4 wt%. The weight average molecular weight was 7620. Epoxy equivalent was 387 g/ mol epoxy.

### Example 11

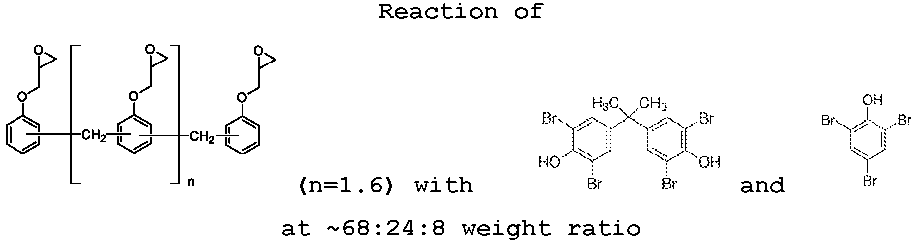

Epoxy Novolac 438 (98.2 g) was melted in a glass vessel and heated to 155°C. TBBA (34.4g) was added, followed by the addition of the catayst TBPB (50mg). TBP (11.1g) was the last added reactant. The temperature droped to 120-130°C; the mixture was re-heated to 155°C, stirred for 5-10 minutes, then poured onto a tray and placed in an oven at 160°C for 6 hours. The product was manually crushed with the aid of a pestle and mortar, and the powder collected was subjected to analysis.

Melting range was found to be from 63 to 96°C. DSC analysis indicates that the T_{g} (midpoint) is 40.3°C. Bbromine content of the product was 19.8 wt%. The weight average molecular weight was 11320. Epoxy equivalent was 390 g/ mol epoxy.

### Example 12

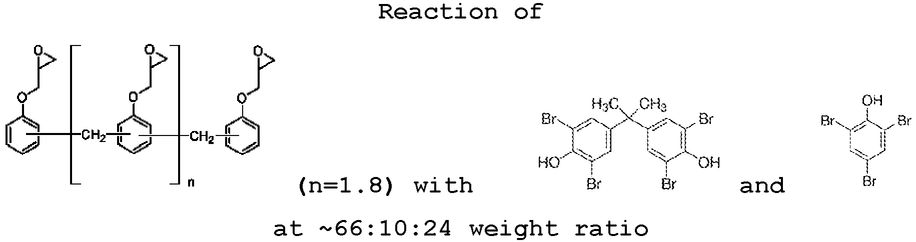

Epoxy Novolac 439 (116.1 g) was melted in a glass vessel and heated to 155°. TBBA (17.4g) was added, followed by the addition of the catayst TBPB (50mg). TBP (41.3g) was the last added reactant. The temperature droped to 120-130°C; the mixture was re-heated to 155°C, stirred for 5-10 minutes, poured onto a tray and placed in an oven at 160°C for 6 hours. The product was manually crushed with the aid of a pestle and mortar, and the powder collected was subjected to analysis.

Melting range was found to be from 60.5 to 78.9°C. DSC analysis indicates that the T_{g} (midpoint) is 38.8°C. Bromine content of the product was 22.7 wt%. The weight average molecular weight was 215700. Epoxy equivalent was 456 g/mol epoxy.

### Example 13 (comparative)

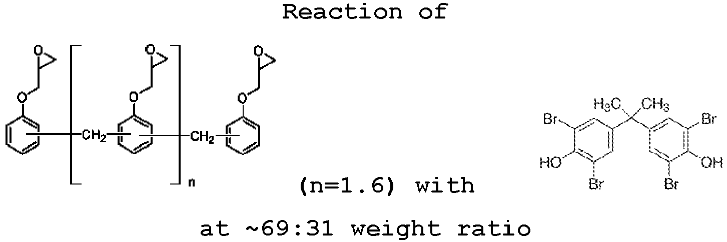

Epoxy Novolac 438 (98.3 g) was melted in a glass vessel and heated to 155°. TBBA (43.6g) was added, followed by the addition of the catayst TBPB (50mg). The temperature droped to 120-130°C; the mixture was re-heated to 155°C, stirred for 5-10 minutes, poured onto a tray and placed in an oven at 160°C for 6 hours. The product was manually crashed with the aid of a pestle and mortar, and the powder collected was subjected to analysis.

Melting range was found to be from 67.6 to 90.6°C. DSC analysis indicates that the T_{g} (midpoint) 42°C. The bromine content of the product was 17.3 wt%. The weight average molecular weight was 31704. Epoxy equivalent was 373 g/mol epoxy.

In the next sets of Examples (Examples 14-16; 17-19; 20-23 and 24-25), polystyrene formulations were prepared. Polystyrene grade used was PS 124N from Styrolution Group. As a brominated polymeric flame retardant, FR-122P was used in conjunction with different stabilizers. The stability of the resulting formulations was studied for:
a change in appearance by visually inspecting molded specimens subjected to severe conditions (molded samples were press molded in a press device ex Labtech at two temperatures: 200°C for 3 minutes and 220°C for 5 minutes);
a chemical change utilizing the HBr release test (1 g of pellets in a test tube are heated to 230°C and the time that elapsed until evolving HBr is detected is recorded; HBr detection is by indicator paper); and
thermogravimetric analysis (TGA), which measures the weight loss of a sample as sample temperature is increased (in air, at heating rate of 10°C/minute); the temperature at which 5% weight loss occurs was recorded.

To prepare the formulations, polystyrene (PS 124n pellets from BASF) and other ingredients were fed into a twin-screw corotating extruder ZE25 with L/D=32 with open vent at 7^{th} zone. The operating parameters of the extruder were as follows:
Barrel temperatures were set at (from feed end to discharge end): T₁=no heating, T₂=160°C, T₃=160°C, T₄=160°C, T₅=160°C, T₆=160°C, T₇ vent = 160°C, T₈=160°C; Tg die= 180°C.
Screw rotation speed: 350 rpm
Feeding rate: 10-11 kg/hour.

The strands produced were cooled in a water bath and pelletized in a pelletizer 750/3 from Accrapak Systems Ltd. The resultant pellets were dried in a circulating air oven at 80°C for 3 hours. For the visual evaluation, the pellets were press molded in a press into cylindrical bodies with diameter of 7cm and height of 3mm. Experimental details and results are presented in the Working Examples below.

### Examples 14-15 (comparative) and 16 (of the invention)

Using the general procedure described above, polystyrene formulations were prepared. The two comparative stabilizers were F-2200 and F-2016 with epoxy equivalent of 344 g/mole epoxy and 964 g/mole epoxy, respectively. Both are commercially available from ICL-IP; the former is essentially a monomer as shown above and the latter is an oligomer with Mw=1600. The illustrative stabilizer of the invention was the polymer of Formula I-a of Example 1. To evaluate the potency of these three epoxy stabilizers, the amounts of the ingredients in the polystyrene formulations were adjusted to produce polystyrene compositions having the same epoxy equivalent, that is, the stabilizers were applied on equal 'molar' basis such that in all three formulations the epoxy equivalent was 3440 g/mol epoxy. The compositions of the polystyrene formulation prepared and the results of the HBr release test are summarized in Table 1.

**Table 1**

| Example | 14 (comparative) | 15 (comparative) | 16 (of the invention) |
|---|---|---|---|
| **Composition (wt%)** | | | |
| PS 124 | 50 | 32 | 47.6 |
| FR 122P | 40 | 40 | 40 |
| F-2200 | 10 | | |
| F-2016 | | 28 | |
| Stabilizer of Example 1 | | | 12.4 |

| **properties** | | | |
|---|---|---|---|
| HBr release time (min; duplicate) | 8:30 | 11: 15 | 18:00 |
| | 8:25 | 11: 15 | 17:50 |

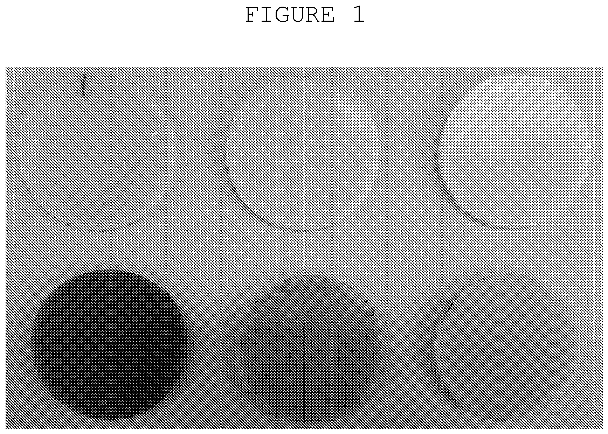

The results of the second stability test are shown in the photo appended as Figure 1. The cylindrical specimens which are seen in the photo are arranged in two rows; the upper row corresponds to specimens subjected to the 3min/200°C test, whereas the lower row relates to the more severe, 5min/220°C test. The left, middle and right sample in each row corresponds to molded specimens obtained from the composition of Examples 14, 15 and 16, respectively. It is seen that the stabilizer of the invention showed better performance in these tests, maintaining lighter color of the specimens and lesser black spots formation after heating.

### Examples 17 (comparative) and 18-19 (of the invention)

Using the general procedure described above, polystyrene formulations were prepared. This time the comparative stabilizer was epoxy cresol novolac resin (Epon® 164), with epoxy equivalent of 219 g/mole epoxy. The illustrative stabilizer of the invention was the polymer of Example 11 with epoxy equivalent of 390 g/ mol epoxy. In addition to the aforementioned chief epoxy stabilizers, two auxiliary stabilizers were incorporated into the polystyrene formulation tested:
(i) a sterically hindered phenolic antioxidant (Irganox 1010, chemically named Pentaerythritol Tetrakis(3-(3,5-di-tert-butyl-4-hydroxyphenyl)propionate); and
(ii) Organophosphite antioxidant (Ultranox 626).

The compositions of the polystyrene formulations and the results of the stability tests are summarized in Table 2.

**Table 2**

| Example | 17 (comparative) | 18 (of the invention) | 19 (of the invention) |
|---|---|---|---|
| **Composition (wt%)** | | | |
| PS 124 | 47 | 47 | 47 |
| FR 122P | 40 | 40 | 40 |
| Epon 164 | 8 | | |
| Stabilizer of Example 11 | | 8 | 8 |
| Irganox 1010 | 1 | 1 | 2.5 |
| Ultranox 626 | 4 | 4 | 2.5 |

| **Thermal properties** | | | |
|---|---|---|---|
| TGA, 5% weight loss recorded at temperature (°C) | 275.75 | 276.41 | 287.58 |
| HBr release time (min; duplicate) | 19:10 | 20:42 | 18:30 |
| | 19:43 | 20:02 | 17:50 |

The results of the stability tests tabulated above indicate that the stabilizer of the invention is at least as good as epoxy cresol novolac resin, despite the fact that the latter has lower epoxy equivalent, that is, more epoxide groups per unit weight available for stabilizing the flame retardant. The relative amounts of the auxiliary stabilizers may be adjusted to further improve thermal stability, that is, by using the organophosphate as the major auxiliary additive.

### Examples 20-23

Using the general procedure described above, polystyrene formulations were prepared. The illustrative stabilizer of the invention was the polymer of Example 11 with epoxy equivalent of 390 g/ mol epoxy. In addition to the aforementioned chief stabilizer, hydrotalcite (Hycite 713, abbreviated HTC) was used as auxiliary stabilizing additive. The compositions of the polystyrene formulations prepared and the results of the HBr release test and TGA are summarized in Table 3.

**Table 3**

| Example | 20 | 21 | 22 | 23 |
|---|---|---|---|---|
| **Composition (wt%)** | | | | |
| PS 124 | 40 | 40 | 38 | 34 |
| FR 122P | 50 | 50 | 50 | 50 |
| Stabilizer of Example 11 | 10 | 8 | 10 | 10 |
| HTC | 0 | 2 | 2 | 6 |

| **Thermal properties** | | | | |
|---|---|---|---|---|
| TGA, 5% weight loss recorded at temperature (°C) | 258.91 | 268.63 | 279.73 | ND |
| HBr release time (min; duplicate) | 7:31 | 9:17 | 11:32 | 17:45 |
| | 7:20 | 9:20 | 11:37 | 16:20 |

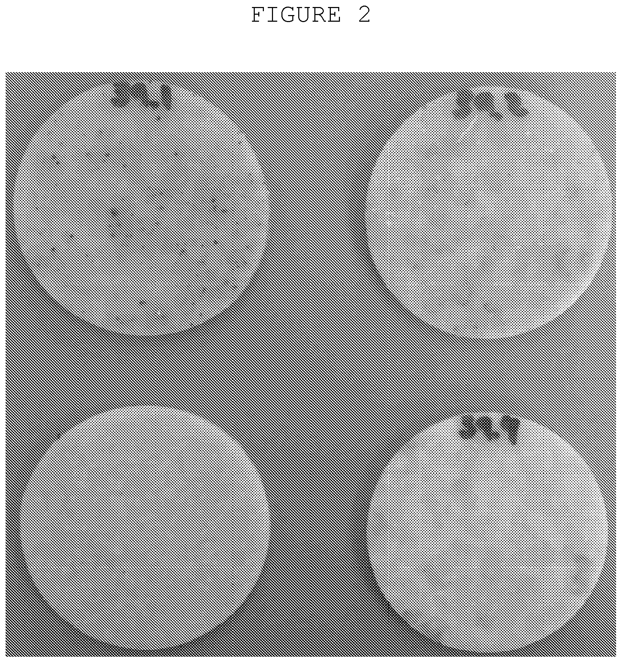

The benefit gained by the addition of HTC is apparent. Referring also to the photo shown in Figure 2, the samples of Examples 20-23 were subjected to the 5min/220°C stability test and photos were taken (top left photo: sample of Example 20; top right photo: sample Example 21; bottom left photo: sample of Example 22; bottom right photo: sample of Example 23). The increased stabilizing effect achieved with the aid of a mixture of the polymer of the invention and hydrotalcite is evidenced by the enhanced whiteness of the 'mixed' formulations.

### Examples 24 (comparative) and 25 (of the invention)

Using the general procedure described above, polystyrene formulations were prepared. This time the comparative stabilizer was the polymer of Example 13, epoxy equivalent of 373 g/ mol epoxy. The illustrative stabilizer of the invention was the polymer of Example 11 with epoxy equivalent of 390 g/ mol epoxy. The compositions of the polystyrene formulations prepared and the results of the HBr release test are summarized in Table 4.

**Table 4**

| Example | 24 (comparative) | 25 (of the invention) |
|---|---|---|
| **Composition (wt%)** | | |
| PS 124 | 50 | 50 |
| FR 122P | 40 | 40 |
| Stabilizer of Example 13 | 10 | |
| Stabilizer of Example 11 | | 10 |

| **properties** | | |
|---|---|---|
| HBr release time (min; duplicate) | 9:55 | 11: 00 |
| | 10:29 | 11:40;10:40 |

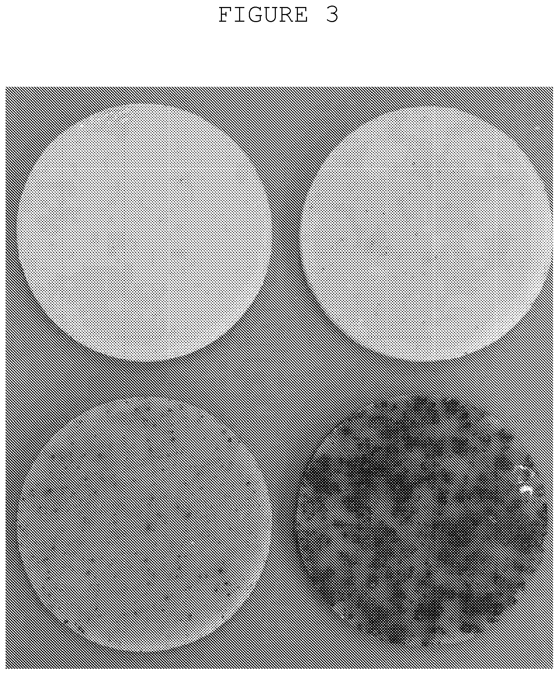

The HBr release test indicates the superiority of the polymer of the invention, with TBP pendant groups, over structurally similar polymer devoid of such pendant groups. The same observation could be made on the basis of the results of the 3min/200°C and 5min/220°C tests, presented by the photos in Figure 3 (top left photo: sample of Example 25 following the 3min/200°C test; top right photo: sample of Example 24 following the 3min/200°C test; bottom left photo: sample of Example 25, following the 5min/220°C test; bottom right photo: sample of Example 24 following the 5min/220°C test).

### Examples 26-27 (of the invention) and 28-29 (comparative)

Polymers of the invention and two commercial grades of cresol novolac epoxy resins were tested to determine their color properties (according to the APHA and Gardner tests, both as 40 w/v solution in dioxane). The results are tabulated in Table 5.

**Table 5**

| Example | polymer | APHA test | Gardner test |
|---|---|---|---|
| 26 | Polymer of Example 1 | 164 | 0.7 |
| 27 | Polymer of Example 11 | 94 | 0.4 |
| 28 | Epon™ resin 164 ex. Momentive (Hexion) | 700 | 4.0 |
| 29 | Araldite® ECN 1280 ex. Huntsman | 591 | 3.6 |

### Examples 30-60

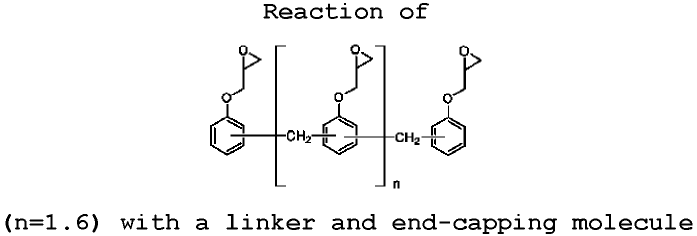

Additional examples were prepared as follows:
Epoxy Novolac 438 was melted in a glass vessel and heated to 120-155°C. A bi-functional compound was added, followed by the addition of the catayst (50 mg TBPB). End-capping molecle (that is, the momohydroxy aromatic compound) was the last added reactant. The temperature droped to 120-130°C; the mixture was re-heated to 150-180°C, stirred for 5-10 minutes, then poured onto a tray and placed in an oven at 150-160°C for 5-6 hours. The solid product obtained was manually crushed with the aid of a pestle and mortar, and the powder collected was subjected to analysis. The various linkers and end-capping molecules applied, their amounts, as well as analytical results, are given in the tables below. Each table is associated with a specific sub-class of linkers.

**Table 6 - the bi-functional molecule is HO-R¹-OH, comprising two non-fused or fused aromatic rings, each ring bearing one functional group (-OH) enabling crosslinking:**

| Ex | Epoxy Novolac 438 amount, g | linker molecule amount, g | Monohydroxy aromatic amount, g | Melting range °C | EEW (g/mol-eqv) |
|---|---|---|---|---|---|
| 30 | 109.5 g | 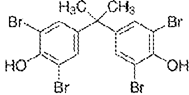 38.3 g | 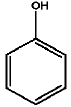 3.5 g | 61.6-82 | 358 |
| 31 | 100 g | 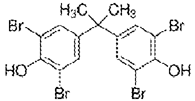 32.85 g | 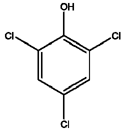 5.73 g | 57.2-84.4 | 367 |
| 32 | 100 g | 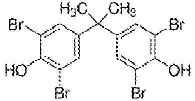 32.85 g | 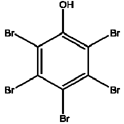 6.7 g | 64.1-90 | 403 |
| 33 | 100 g | 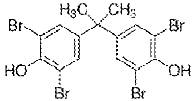 32.85 g | 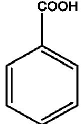 4.16 g | 58.7-76.4 | 365 |
| 34 | 100 g | 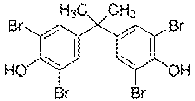 32.85 g | 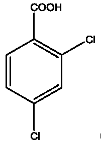 6.51 g | 59.9-80.7 | 377 |
| 35 | 100 g | 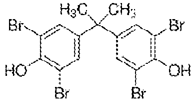 32.85 g | 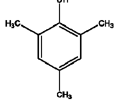 2,4,6-trimethylphenol 4.64 g | 57.8-81.2 | 354 |
| 36 | 100 g | 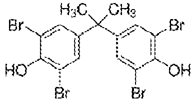 32.85 g | 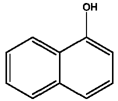 4.92 g | ND | ND |
| 37 | 100 g | Not used | 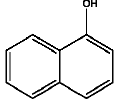 35.0 g | ND | ND |
| 38 | 100 g | 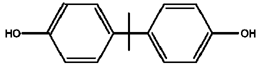 (Bisphenol A, 16.2 g) | 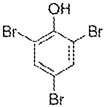 11.3 g | 59.8-76.1 | 365 |
| 39 | 109.5 g | 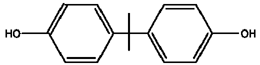 (Bisphenol A, 16.2 g) | 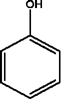 3.5 g | 55.4-87.7 | 308 |
| 40 | 100 g | 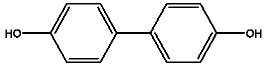 (4,4'-bisphenol 11.9 g) | 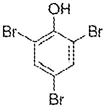 11.3 g | 45.9-74.3 | 279 |
| 41 | 100 g | 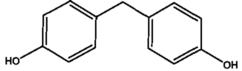 Bisphenol-F, 12.1 g | 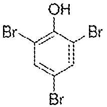 11.3 g | 46.4-70.2 | 325 |
| 42 | 100 g | 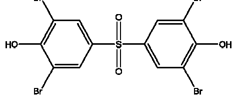 (TBBS, 34.2 g) | 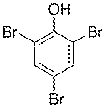 11.3 g | ND | ND |
| 43 | 100 g | 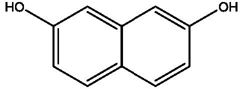 (2,7-dihydroxy naphthalene, 9,67 g) | 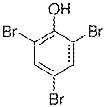 11.3 g | 56-73 | 337 |

**Table 7 - the polyfunctional compound is HO-R¹-OH, HOOC-R²-COOH or HO-R³-COOH, consisting of one aromatic ring bearing at least two functional groups (-OH, -COOH) enabling crosslinking:**

| Ex | Epoxy Novolac 438 amount, g | Linker molecule amount, g | Monohydroxy aromatic amount, g | Melting range °C | EEW (g/mol-eqv) |
|---|---|---|---|---|---|
| 44 | 100 g | 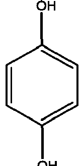 Hydroquinone 7.04 g | 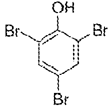 TBP, 11.3 g | DSC 28.6 | ND |
| 45 | 100 g | 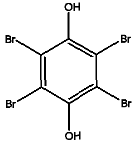 TetrabromoHydroquinone, 27.2 g | 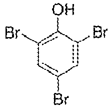 TBP, 11.3 g | DSC 28.6 | ND |
| 46 | 100 g | 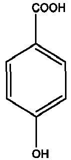 4.45 g | 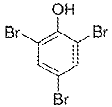 11.3 g | 39.3-49.6 | 263 |
| 47 | 100 g | 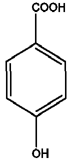 5.86 g | 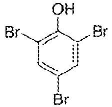 11.3 g | 46.3-70.3 | 280 |
| 48 | 100 g | 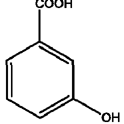 5.9 g | 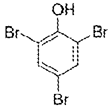 11.3 g | 39.4-57.3 | 293 |
| 49 | 100 g | 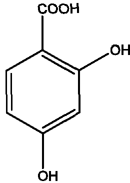 4.36 g | 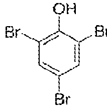 11.3 g | ND | ND |
| 50 | 100 g | 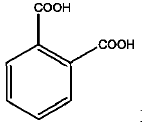 10.03 g | 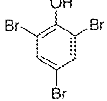 11.3 g | ND | ND |
| 51 | 100 g | 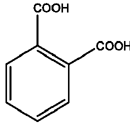 5.0 g | 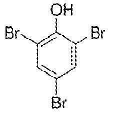 11.3 g | 40-60 | 284 |
| 52 | 100 g | 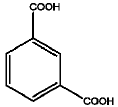 5.0 | 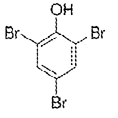 11.3 g | 39.2-57.5 | 283 |

**Table 8 - the bi-functional compound is ₂HN-R⁴-NH₂, consisting of one or two aromatic rings bearing -NH₂ groups enabling crosslinking:**

| Ex | Epoxy Novolac 438 amount, g | Linker molecule amount, g | Monohydroxy aromatic amount, g | Melting range °C | EEW (g/mol-eqv) |
|---|---|---|---|---|---|
| 53 | 100 g | 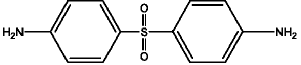 2.12 g | 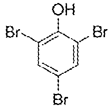 11.3 g | ND | ND |
| 54 | 100 g | 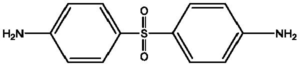 4.0 g | 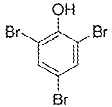 25.0 g | ND | ND |
| 55 | 100 g | 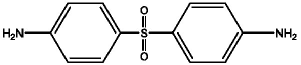 5.0 g | 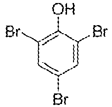 25.0 g | ND | ND |
| 56 | 100 g | 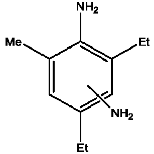 4.0 g | 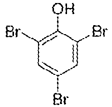 25 g | ND | ND |
| 57 | 100 g | 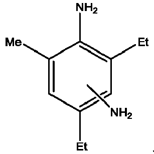 5.0 g | 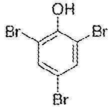 25 g | ND | ND |

**Table 9 - the bi-functional compound is HOOC(CH=CH)ₘ(CH₂)ₙCOOH; that is, an aliphatic chain (optionally interrupted with heteroatom(s)) bearing two -COOH groups or the bi-functional agent is mono amine:**

| Ex | Epoxy Novolac 438 amount, g | Linker molecule amount, g | Monohydroxy aromatic amount, g | Melting range °C | EEW (g/mol-eqv) |
|---|---|---|---|---|---|
| 58 | 100 g | 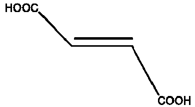 10.g | 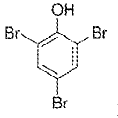 15.0 g | 44.6-67.8 | 327 |
| 59 | 100 g | 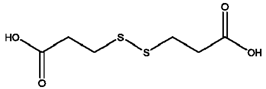 6.8 g | 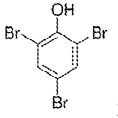 11.3 g | 36.3-47.7 | 272 |
| 60 | 100 g | 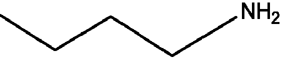 3.0 g | 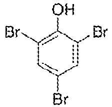 20.0 | ND | ND |

### Examples 61-63

Using the general procedure described above, polystyrene formulations were prepared. Stabilizers of the invention that were tested are the polymer of Example 11 (390 g/ mol epoxy); the polymer of Example 48 (293 g/ mol epoxy) and the polymer of Example 58, (327 g/ mol epoxy). The compositions of the polystyrene formulations prepared and the results of the HBr release test are summarized in Table 10.

**Table 10**

| Example | 61* | 62 | 63 |
|---|---|---|---|
| **composition** | | | |
| PS 124 | 50 | 50 | 50 |
| FR 122P | 40 | 40 | 40 |
| Stabilizer of Example 11 | 10 | | |
| Stabilizer of Example 48 | | 10 | |
| Stabilizer of Example 58 | | | 10 |

| **properties** | | | |
|---|---|---|---|
| HBr release time (min:sec; average sd) | 12:46 | 13:50 | 15:00 |
| | 0.25 | 0:26 | 0:36 |

| | | | |
|---|---|---|---|
| *(the results of Example 61 are different from Example 25 because a different lot of FR 122P has been used this time) | | | |

## Claims

1. A polystyrene composition, comprising:
polystyrene;
a flame retardant selected from the group consisting of bromine-containing polymers having bromine atoms bound to aliphatic carbons, and
a stabilizer selected from the group consisting of polymers comprising chains of Formula I: 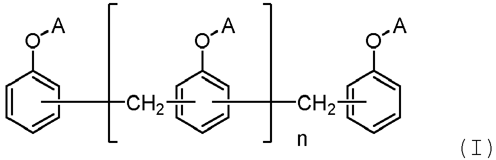 wherein n is 0.2≤n≤7, and wherein
(i) the polymer comprises individual, nonlinked chains of Formula (I), with A being a pendant group selected from:
**A**= 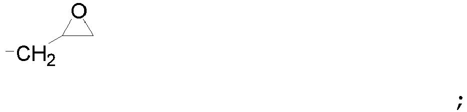 and at least one of
**A=** -CH₂-CHOH-CH₂-O-C₆H₅₋ₘXₘ, wherein X is independently selected from the group consisting of halogen and alkyl and m is an integer indicating the number of halogen atoms or alkyl groups attached to the benzene ring (0≤m≤5);
**A=** -CH₂-CHOH-CH₂-O-Ar, wherein Ar comprises at least two aromatic rings optionally substituted with alkyl or halogen;
**A=** -CH₂-CHOH-CH₂-O(O)C-C₆H₅₋ₘXₘ, wherein X is independently selected from the group consisting of halogen and alkyl and m is an integer indicating the number of halogen atoms or alkyl groups attached to the benzene ring (0≤m≤5); or
**A=** -CH₂-CHOH-CH₂-O(O)C-Ar, wherein Ar comprises at least two aromatic rings optionally substituted with alkyl or halogen;
(ii) the polymer is non-linear, comprising chains of Formula I linked together by having at least one A group of a first chain and an A group of at least a second chain forming together a bridge of the formula -CH₂-CHOH-CH₂-Linker-CH₂-CHOH-CH₂-, where remaining A groups in said chains being pendant groups selected from:
**A**= 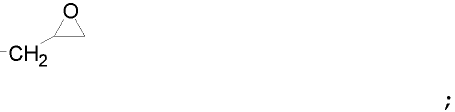 and at least one of
**A=** -CH₂-CHOH-CH₂-O-C₆H₅₋ₘXₘ, wherein X is independently selected from the group consisting of halogen and alkyl and m is an integer indicating the number of halogen atoms or alkyl groups attached to the benzene ring (0≤m≤5);
**A=** -CH₂-CHOH-CH₂-O-Ar, wherein Ar comprises at least two aromatic rings optionally substituted with alkyl or halogen;
**A=** -CH₂-CHOH-CH₂-O(O)C-C₆H₅₋ₘXₘ, wherein X is independently selected from the group consisting of halogen and alkyl and m is an integer indicating the number of halogen atoms or alkyl groups attached to the benzene ring (0≤m≤5); or
**A=** -CH₂-CHOH-CH₂-O(O)C-Ar, wherein Ar comprises at least two aromatic rings optionally substituted with alkyl or halogen.

2. The polystyrene composition according to claim 1, wherein the stabilizer comprises individual chains of Formula I-a: 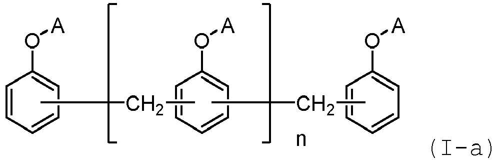 wherein n is as defined in claim 1, and the pendant groups denoted by A are selected from both
**A**= 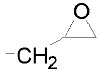 and
**A=** -CH₂-CHOH-CH₂-O-C₆H₅₋ₘHalₘ, wherein Hal is halogen, and m is an integer indicating the number of halogen atoms attached to the benzene ring, m being 0, 1, 2 ,3, 4 or 5, and wherein preferably the pendant groups denoted by A are selected from both
**A**= 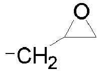 and

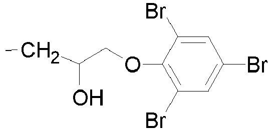

3. The polystyrene composition according to claim 1, wherein the stabilizer is of Formula I-b: 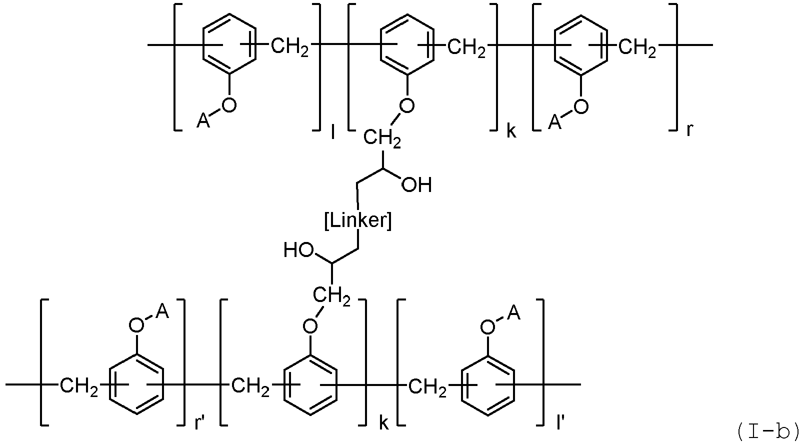 wherein:
r and r' independently indicate the number of repeat units where A is a pendant group of the formula:
A= 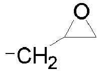
1 and l' independently indicate the number of repeat units where A is a pendant group of the formula:
**A=** -CH₂-CHOH-CH₂-O-C₆H₅₋ₘXₘ, wherein X is independently selected from the group consisting of halogen and alkyl and m is an integer indicating the number of halogen atoms or alkyl groups attached to the benzene ring (0≤m≤5); or of the formula
**A=** -CH₂-CHOH-CH₂-O-Ar, wherein Ar comprises at least two aromatic rings optionally substituted with alkyl or halogen; or of the formula
**A=** -CH₂-CHOH-CH₂-O(O)C-C₆H₅₋ₘXₘ, wherein X is independently selected from the group consisting of halogen and alkyl and m is an integer indicating the number of halogen atoms or alkyl groups attached to the benzene ring (0≤m≤5); or of the formula
**A=** -CH₂-CHOH-CH₂-O(O)C-Ar, wherein Ar comprises at least two aromatic rings optionally substituted with alkyl or halogen; and
k indicates the number of repeat units which are junction points through which individual chains are crosslinked, the Linker being selected from the group consisting of -O-R¹-O-, -O(O)C-R²-C(O)O-, -O-R³-C(O)O-, -HN-R⁴-NH- and R⁴-(N=), where R¹, R², R³ and R⁴ comprise aromatic or aliphatic moieties ;
and wherein r+k+l=n+2, r'+k+l'=n+2, where 0.2≤n≤7.

4. The polystyrene composition according to claim 3, wherein the stabilizer comprises pendent groups A of the formula

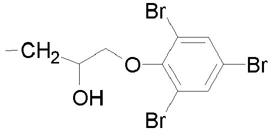

5. The polystyrene composition according to claim 3 or 4, wherein the stabilizer comprises the Linker -O-R¹-O-.

6. The polystyrene composition according to claim 5, wherein the Linker has the formula -O-Ar∼∼Z∼∼Ar-O-, wherein each Ar is an optionally halogenated benzene ring and ∼∼Z∼∼ indicates the bridge connecting carbon atoms of said two benzene rings.

7. The polystyrene composition according to claim 6, wherein the Linker has the formula -O-C₆H₄₋ₜHalₜ-(CX₂)ₚ-C₆H₄₋ₜHalₜ-O-, where each X is independently H or -CH₃, p is 0 or 1, Hal is halogen and t is an integer indicating the number of halogen atoms attached to the benzene ring.

8. The polystyrene composition according to claim 7, wherein the stabilizer comprises chains of the structure:

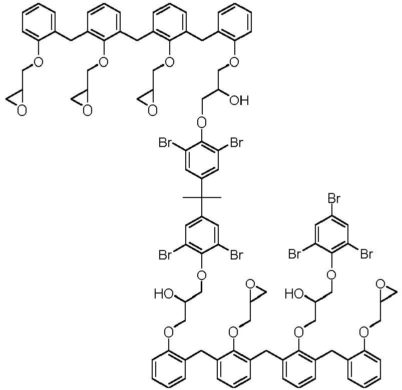

9. The polystyrene composition according to claim 3 or 4, wherein the Linker is selected from the group consisting of: -O(O)C-R²-C(O)O- and -O(O)C-R³-C(O)O-, wherein R² and R³ comprise aromatic or aliphatic moieties

10. The polystyrene composition according to claim- 9, wherein the Linker is -O(O)C-R²-C(O)O-, and is selected from the group consisting of:
-O(O)C-Ar-C(O)O- wherein Ar is an optionally substituted aromatic system;
-O(O)C(CH₂)ₙC(O)O-, with 0≤n≤20, wherein the -(CH₂)ₙ- chain may be branched and/or interrupted by one or more heteroatom(s);
-O(O)C(CH=CH)ₘ(CH₂)ₙC(O)O-, where m≥1 and n≥0, wherein the-(CH=CH)ₘ(CH₂)ₙ- chain may be branched and/or interrupted by one or more heteroatom(s).

11. The polystyrene composition according to any one of claims 3 to 9, wherein the stabilizer has an epoxy equivalent weight in the range from 250 to 600 g/mol epoxy determined according to ASTM D 1652.

12. A polystyrene composition according to any one of the preceding claims, wherein the bromine-containing flame retardant to be stabilized is polystyrene-*block*-brominated polybutadiene-*block*-polystyrene.

13. A method for thermally stabilizing bromine-containing polymeric flame retardant having bromine atoms bound to aliphatic carbons, the method comprises adding to a bulk polymer said brominated flame retardant in conjunction with a stabilizer of Formulae I, I-a or I-b, as defined in any one of claims 1 to 12.

14. A method according to claim 13, wherein the stabilizer is of Formula I-b, as defined in any one of claims 3 to 12.

15. A method according to claim 13 or 14, wherein the bromine-containing flame retardant to be stabilized is polystyrene-block-brominated polybutadiene-block-polystyrene.

## Patentansprüche

1. Eine Polystyrol-Zusammensetzung, umfassend
Polystyrol;
ein Flammschutzmittel, ausgewählt aus der Gruppe bestehend aus bromhaltigen Polymeren mit an aliphatische Kohlenstoffe gebundenen Bromatomen, und
einen Stabilisator, ausgewählt aus der Gruppe, die aus Polymeren besteht, die Ketten der Formel I umfassen: 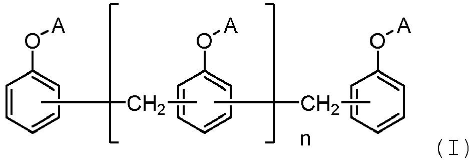 wobei n 0,2≤n≤7 ist, und wobei
(i) das Polymer einzelne, nicht verknüpfte Ketten der Formel (I) umfasst, wobei A eine anhängende Gruppe ist, ausgewählt aus:
A= 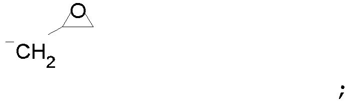 und mindestens einem von
**A=** -CH₂-CHOH-CH₂-O-C₆H₅-ₘXₘ, wobei X unabhängig ausgewählt ist aus der Gruppe bestehend aus Halogen und Alkyl und m eine ganze Zahl ist, die die Anzahl der an den Benzolring gebundenen Halogenatome oder Alkylgruppen angibt (0≤m≤5);
**A=** -CH₂-CHOH-CH₂-O-Ar, wobei Ar mindestens zwei aromatische Ringe umfasst, die gegebenenfalls mit Alkyl oder Halogen substituiert sind;
**A=** -CH₂-CHOH-CH₂-O(O)C-C₆H₅-ₘXₘ, wobei X unabhängig ausgewählt ist aus der Gruppe bestehend aus Halogen und Alkyl und m eine ganze Zahl ist, die die Anzahl der an den Benzolring gebundenen Halogenatome oder Alkylgruppen angibt (0≤m≤5); oder
**A=** -CH₂-CHOH-CH₂-O(O)C-Ar, wobei Ar mindestens zwei aromatische Ringe umfasst, die gegebenenfalls mit Alkyl oder Halogen substituiert sind;
(ii) das Polymer nicht-linear ist, umfassend Ketten der Formel I, die miteinander verbunden sind, indem mindestens eine A-Gruppe einer ersten Kette und eine A-Gruppe mindestens einer zweiten Kette zusammen eine Brücke der Formel -CH₂-CHOH-CH₂-Linker-CH₂-CHOH-CH₂- bilden, wobei die verbleibenden A-Gruppen in den Ketten Seitengruppen sind, ausgewählt aus:
A= 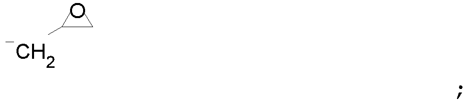 und mindestens einem von
**A=** -CH₂-CHOH-CH₂-O-C₆H₅-ₘXₘ, wobei X unabhängig ausgewählt ist aus der Gruppe bestehend aus Halogen und Alkyl und m eine ganze Zahl ist, die die Anzahl der an den Benzolring gebundenen Halogenatome oder Alkylgruppen angibt (0≤m≤5);
**A=** -CH₂-CHOH-CH₂-O-Ar, wobei Ar mindestens zwei aromatische Ringe umfasst, die gegebenenfalls mit Alkyl oder Halogen substituiert sind;
**A=** -CH₂-CHOH-CH₂-O(O)C-C₆H₅-ₘXₘ, wobei X unabhängig ausgewählt ist aus der Gruppe bestehend aus Halogen und Alkyl und m eine ganze Zahl ist, die die Anzahl der an den Benzolring gebundenen Halogenatome oder Alkylgruppen angibt (0≤m≤5); oder
**A=** -CH₂-CHOH-CH₂-O(O)C-Ar, wobei Ar mindestens zwei aromatische Ringe umfasst, die gegebenenfalls mit Alkyl oder Halogen substituiert sind.

2. Polystyrol-Zusammensetzung nach Anspruch 1, wobei der Stabilisator einzelne Ketten der Formel I-a umfasst: 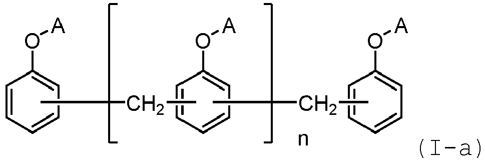 wobei n wie in Anspruch 1 definiert ist und die mit A bezeichneten Seitengruppen ausgewählt sind aus sowohl
A= 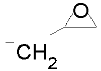 und
**A=** -CH₂-CHOH-CH₂-O-C₆H₅-ₘHalₘ, wobei Hal Halogen ist und m eine ganze Zahl ist, die die Anzahl der an den Benzolring gebundenen Halogenatome angibt, wobei m 0, 1, 2, 3, 4 oder 5 ist, und wobei vorzugsweise die mit A bezeichneten Seitengruppen ausgewählt sind aus sowohl
**A=** 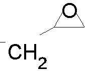 und

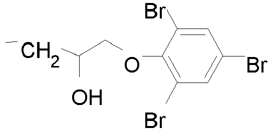

3. Polystyrol-Zusammensetzung nach Anspruch 1, wobei der Stabilisator die Formel I-b hat: 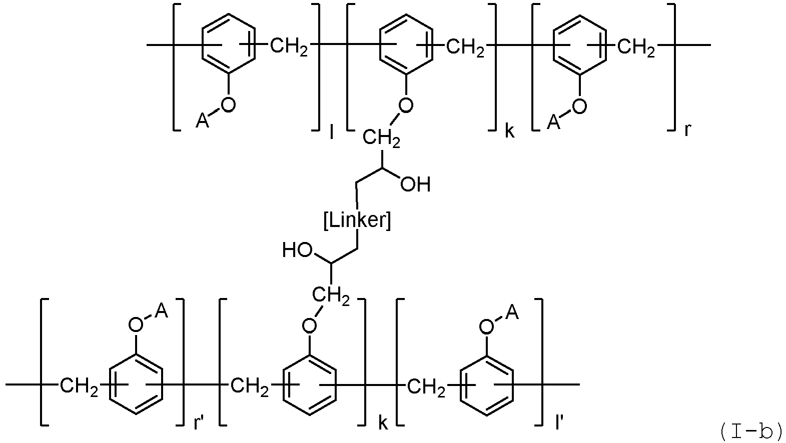 wobei:
r und r' unabhängig voneinander die Anzahl der Wiederholungseinheiten angeben, wobei A eine Seitengruppe der Formel ist:
**A=** 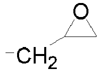
l und l' unabhängig voneinander die Anzahl der Wiederholungseinheiten angeben, wobei A eine Seitengruppe der Formel ist:
**A=** -CH₂-CHOH-CH₂-O-C₆H₅-ₘXₘ, wobei X unabhängig ausgewählt ist aus der Gruppe bestehend aus Halogen und Alkyl und m eine ganze Zahl ist, die die Anzahl der an den Benzolring gebundenen Halogenatome oder Alkylgruppen angibt (0≤m≤5); oder der Formel
**A=** -CH₂-CHOH-CH₂-O-Ar, wobei Ar mindestens zwei aromatische Ringe umfasst, die gegebenenfalls mit Alkyl oder Halogen substituiert sind; oder der Formel
**A=** -CH₂-CHOH-CH₂-O(O)C-C₆H₅-ₘXₘ, wobei X unabhängig ausgewählt ist aus der Gruppe bestehend aus Halogen und Alkyl und m eine ganze Zahl ist, die die Anzahl der an den Benzolring gebundenen Halogenatome oder Alkylgruppen angibt (0≤m≤5); oder der Formel
**A=** -CH₂-CHOH-CH₂-O(O)C-Ar, wobei Ar mindestens zwei aromatische Ringe umfasst, die gegebenenfalls mit Alkyl oder Halogen substituiert sind;
und
k die Anzahl der Wiederholungseinheiten angibt, die Verbindungspunkte sind, durch die einzelne Ketten vernetzt sind, wobei der Linker ausgewählt ist aus der Gruppe bestehend aus -O-R¹-O-, -O(O)C-R²-C(O)O-, -O-R³-C(O)O-, -HN-R⁴-NH- und R⁴-(N=), wobei R¹, R², R³ und R⁴ aromatische oder aliphatische Reste umfassen;
und wobei r+k+l=n+2, r'+k+1'=n+2, wobei 0,2≤n≤7.

4. Polystyrol-Zusammensetzung nach Anspruch 3, wobei der Stabilisator seitenständige Gruppen A der Formel 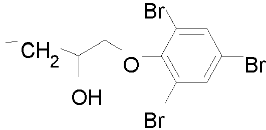 umfasst.

5. Polystyrol-Zusammensetzung nach Anspruch 3 oder 4, wobei der Stabilisator den Linker -O-R¹-O- umfasst.

6. Polystyrol-Zusammensetzung nach Anspruch 5, wobei der Linker die Formel -O-Ar∼∼Z∼∼Ar-O- hat, wobei jedes Ar ein gegebenenfalls halogenierter Benzolring ist und ∼∼Z∼∼ die Brücke bezeichnet, die Kohlenstoffatome der beiden Benzolringe verbindet.

7. Polystyrol-Zusammensetzung nach Anspruch 6, wobei der Linker die Formel -O-C₆H₄-ₜHalₜ-(CX₂)ₚ-C₆H₄-ₜHalₜ-O- hat, wobei jedes X unabhängig H oder -CH₃ ist, p 0 oder 1 ist, Hal Halogen ist und t eine ganze Zahl ist, die die Anzahl der an den Benzolring gebundenen Halogenatome angibt.

8. Polystyrol-Zusammensetzung nach Anspruch 7, wobei der Stabilisator Ketten der Struktur: 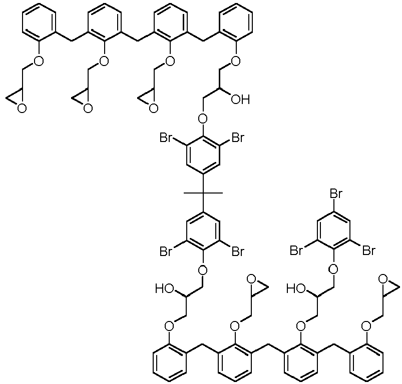 umfasst.

9. Polystyrol-Zusammensetzung nach Anspruch 3 oder 4, wobei der Linker ausgewählt ist aus der Gruppe bestehend aus:
-O(O)C-R²-C(O)O- und -O-R³-C(O)O-, wobei R² und R³ aromatische oder aliphatische Reste umfassen.

10. Polystyrol-Zusammensetzung nach Anspruch 9, wobei der Linker -O(O)C-R²-C(O)O- ist und ausgewählt ist aus der Gruppe bestehend aus:
-O(O)C-Ar-C(O)O-, wobei Ar ein gegebenenfalls substituiertes aromatisches System ist;
-O(O)C(CH₂)ₙC(O)O-, mit 0≤n≤20, wobei die -(CH₂)ₙ-Kette verzweigt und/oder durch ein oder mehrere Heteroatom(e) unterbrochen sein kann;
-O(O)C(CH=CH)ₘ(CH₂)ₙC(O)O-, wobei m≥1 und n≥0, wobei die -(CH=CH)ₘ(CH₂)ₙ-Kette verzweigt und/oder durch ein oder mehrere Heteroatom(e) unterbrochen sein kann.

11. Polystyrol-Zusammensetzung nach einem der Ansprüche 3 bis 9, wobei der Stabilisator ein Epoxyäquivalentgewicht im Bereich von 250 bis 600 g/mol Epoxy, bestimmt nach ASTM D 1652, aufweist.

12. Polystyrol-Zusammensetzung nach einem der vorhergehenden Ansprüche, wobei das zu stabilisierende bromhaltige Flammschutzmittel Polystyrol-Block-Polybutadien-Block-Polystyrol ist.

13. Verfahren zur thermischen Stabilisierung von bromhaltigem, polymerem Flammschutzmittel, das an aliphatische Kohlenstoffe gebundene Bromatome aufweist, wobei das Verfahren die Zugabe des bromhaltigen Flammschutzmittels in Verbindung mit einem Stabilisator der Formeln I, I-a oder I-b, wie in einem der Ansprüche 1 bis 12 definiert, zu einem Massenpolymer umfasst.

14. Verfahren nach Anspruch 13, wobei der Stabilisator die Formel I-b hat, wie in einem der Ansprüche 3 bis 12 definiert.

15. Verfahren nach Anspruch 13 oder 14, wobei es sich bei dem zu stabilisierenden bromhaltigen Flammschutzmittel um Polystyrol-Block-bromiertes Polybutadien-Block-Polystyrol handelt.

## Revendications

1. Composition de polystyrène, comprenant :
du polystyrène ;
un retardateur de flamme choisi dans le groupe constitué par les polymères contenant du brome et ayant des atomes de brome liés à des carbones aliphatiques, et
un stabilisateur choisi dans le groupe constitué par les polymères comprenant des chaînes de formule I : 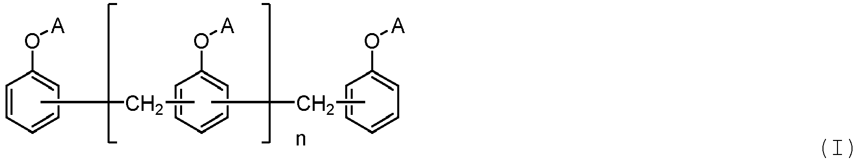
où n est 0.2≤n≤7, et où
(i) le polymère comprend des chaînes individuelles non liées de formule (I), A étant un groupe pendant choisi parmi :
A= 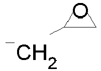 et au moins un des groupes suivants
**A=** -CH₂-CHOH-CH₂-O-C₆H₅-ₘXₘ, où X est indépendamment choisi dans le groupe constitué par un halogène et un alkyle et m est un nombre entier indiquant le nombre d'atomes d'halogène ou de groupes alkyles attachés au cycle benzène (0≤m≤5) ;
**A=** -CH₂-CHOH-CH₂-O-Ar, où Ar comprend au moins deux cycles aromatiques éventuellement substitués par un alkyle ou un halogène ;
**A=** -CH₂-CHOH-CH₂-O (O) C-C₆H₅-ₘXₘ, où X est indépendamment choisi dans le groupe constitué par un halogène et un alkyle et m est un nombre entier indiquant le nombre d'atomes d'halogène ou de groupes alkyle attachés au cycle benzène (0≤m≤5) ; ou
**A=** -CH₂-CHOH-CH₂-O (O) C-Ar, où Ar comprend au moins deux cycles aromatiques éventuellement substitués par un alkyle ou un halogène ;
(ii) le polymère est non linéaire, comprenant des chaînes de formule I liées ensemble en ayant au moins un groupe A d'une première chaîne et un groupe A d'au moins une seconde chaîne formant ensemble un pont de formule -CH₂-CHOH-CH₂-Linker-CH₂-CHOH-CH₂-, où les groupes A restants dans lesdites chaînes sont des groupes pendants choisis parmi :
**A=** 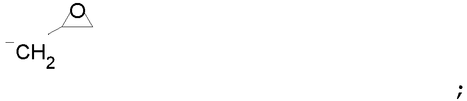 et au moins l'un des groupes
**A=** -CH₂-CHOH-CH₂-O-C₆H₅-ₘXₘ, où X est indépendamment choisi dans le groupe constitué par un halogène et un alkyle et m est un nombre entier indiquant le nombre d'atomes d'halogène ou de groupes alkyles attachés au cycle benzène (0≤m≤5) ;
**A=** -CH₂-CHOH-CH₂-O-Ar, où Ar comprend au moins deux cycles aromatiques éventuellement substitués par un alkyle ou un halogène ;
**A=** -CH₂-CHOH-CH₂-O(O)C-C₆H₅-ₘXₘ, où X est indépendamment choisi dans le groupe constitué par un halogène et un alkyle et m est un nombre entier indiquant le nombre d'atomes d'halogène ou de groupes alkyle attachés au cycle benzène (0≤m≤5) ; ou
**A=** -CH₂-CHOH-CH₂-O (O) C-Ar, où Ar comprend au moins deux cycles aromatiques éventuellement substitués par un alkyle ou un halogène.

2. Composition de polystyrène selon la revendication 1, dans laquelle le stabilisateur comprend des chaînes individuelles de formule I-a : 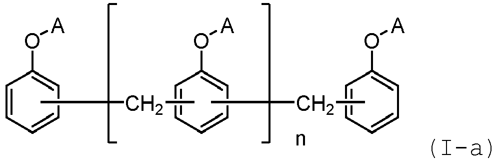 dans laquelle n est tel que défini dans la revendication 1, et les groupes pendants désignés par A sont choisis parmi les deux
**A=** 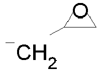 et
**A=** -CH₂-CHOH-CH₂-O-C₆H₅-ₘHalₘ, où Hal est un halogène, et m est un nombre entier indiquant le nombre d'atomes d'halogène fixés au cycle benzène, m étant 0, 1, 2 ,3, 4 ou 5, et où de préférence les groupes pendants désignés par A sont choisis parmi les deux
**A=** 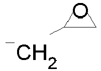 et

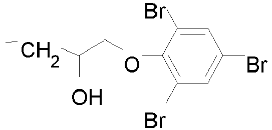

3. Composition de polystyrène selon la revendication 1, dans laquelle le stabilisateur est de formule I-b : 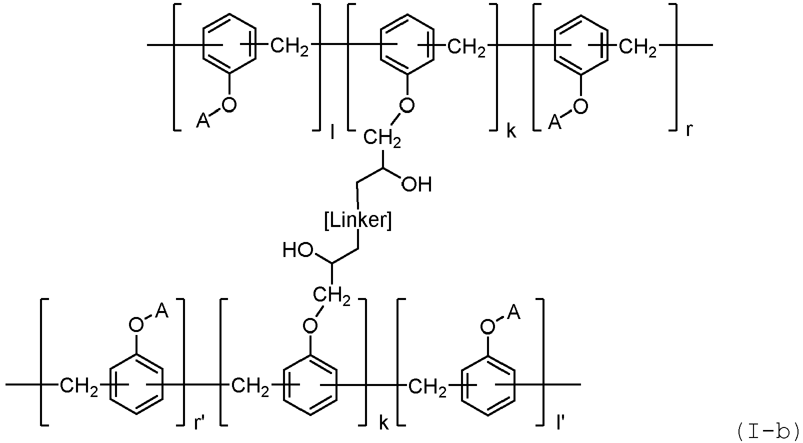 où :
r et r' indiquent indépendamment le nombre d'unités répétitives où A est un groupe pendant de la formule :
**A=** 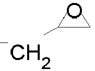
l et l' indiquent indépendamment le nombre d'unités répétitives où A est un groupe pendant de formule :
**A=** -CH₂-CHOH-CH₂-O-C₆H₅-ₘXₘ, où X est indépendamment choisi dans le groupe constitué par un halogène et un alkyle et m est un nombre entier indiquant le nombre d'atomes d'halogène ou de groupes alkyle attachés au cycle benzène (0≤m≤5) ; ou de formule
**A=** -CH₂-CHOH-CH₂-O-Ar, où Ar comprend au moins deux cycles aromatiques éventuellement substitués par un alkyle ou un halogène ; ou de formule
**A=** -CH₂-CHOH-CH₂-O (O) C-C₆H₅-ₘXₘ, où X est indépendamment choisi dans le groupe constitué par un halogène et un alkyle et m est un nombre entier indiquant le nombre d'atomes d'halogène ou de groupes alkyle attachés au cycle benzène (0≤m≤5) ; ou de formule
**A=** -CH₂-CHOH-CH₂-O(O)C-Ar, où Ar comprend au moins deux cycles aromatiques éventuellement substitués par un alkyle ou un halogène ;
et
k indique le nombre d'unités répétitives qui sont des points de jonction par lesquels des chaînes individuelles sont réticulées, l'élément de liaison étant choisi dans le groupe constitué par -O-R¹-O-, -O(O)C-R²-C(O)O-, -O-R³-C(O)O-, -HN-R⁴-NH- et R⁴-(N=), où R¹, R², R³ et R⁴ comprennent des fragments aromatiques ou aliphatiques ;
et où r+k+l=n+2, r'+k+l'=n+2, où 0.2≤n≤7.

4. Composition de polystyrène selon la revendication 3, dans laquelle le stabilisateur comprend des groupes pendants A de formule

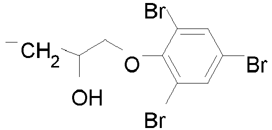

5. Composition de polystyrène selon la revendication 3 ou 4, dans laquelle le stabilisateur comprend le Linker -O-R¹-O-.

6. Composition de polystyrène selon la revendication 5, dans laquelle le Linker a la formule -O-Ar∼∼Z∼∼Ar-O-, dans laquelle chaque Ar est un cycle benzène éventuellement halogéné et ∼∼Z∼∼ indique le pont reliant les atomes de carbone desdits deux cycles benzène.

7. Composition de polystyrène selon la revendication 6, dans laquelle le Linker a la formule -O-C₆H₄-ₜHalₜ-(CX₂)ₚ-C₆H₄-ₜHalₜ-O-, où chaque X est indépendamment H ou -CH₃, p est 0 ou 1, Hal est un halogène et t est un nombre entier indiquant le nombre d'atomes d'halogène attachés au cycle benzène.

8. Composition de polystyrène selon la revendication 7, dans laquelle le stabilisateur comprend des chaînes de la structure

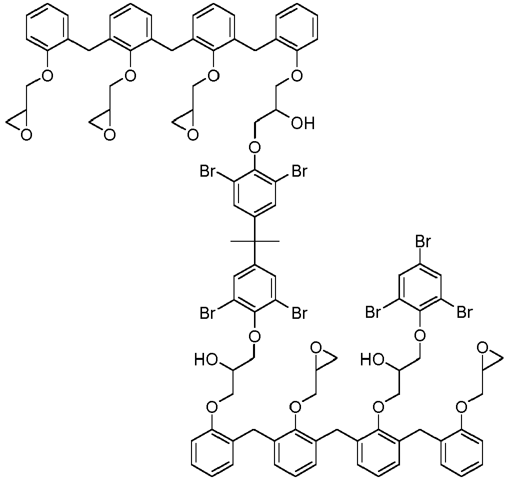

9. Composition de polystyrène selon la revendication 3 ou 4, dans laquelle le Linker est choisi dans le groupe constitué par :
-O(O)C-R²-C(O)O- et -O-R³-C(O)O-, où R² et R³ comprennent des fragments aromatiques ou aliphatiques.

10. Composition de polystyrène selon la revendication 9, dans laquelle le Linker est -O(O)C-R²-C(O)O-, et est choisi dans le groupe constitué par :
-0(0)C-Ar-C(0)0- où Ar est un système aromatique éventuellement substitué ;
-O(O)C(CH₂)ₙC(O)O-, avec 0≤n≤20, dans lequel la chaîne -(CH₂)ₙ- peut être ramifiée et/ou interrompue par un ou plusieurs hétéroatome(s) ;
-O(O)C(CH=CH)ₘ(CH₂)ₙC(O)O-, avec m≥1 et n≥0, où la chaîne-(CH=CH)ₘ(CH₂)ₙ- peut être ramifiée et/ou interrompue par un ou plusieurs hétéroatome(s).

11. Composition de polystyrène selon l'une quelconque des revendications 3 à 9, dans laquelle le stabilisateur a un poids équivalent d'époxy dans la gamme de 250 à 600 g/mole d'époxy déterminé selon la norme ASTM D 1652.

12. Composition de polystyrène selon l'une quelconque des revendications précédentes, dans laquelle le retardateur de flamme contenant du brome à stabiliser est du polystyrène-bromé à blocs de polybutadiène-polystyrène.

13. Procédé pour stabiliser thermiquement un retardateur de flamme polymérique contenant du brome ayant des atomes de brome liés à des carbones aliphatiques, le procédé comprenant l'addition à un polymère en masse desdits retardateurs de flamme bromés en conjonction avec un stabilisateur de formules I, I-a ou I-b, telles que définies dans l'une quelconque des revendications 1 à 12.

14. Procédé selon la revendication 13, dans laquelle le stabilisateur est de formule I-b, telle que définie dans l'une quelconque des revendications 3 à 12.

15. Procédé selon la revendication 13 ou 14, dans lequel le retardateur de flamme contenant du brome à stabiliser est du polystyrène-bromé en bloc-polybutadiène-bloc-polystyrène.
